# EUROPEAN PATENT APPLICATION

(11) **EP 4 676 009 A1**
(43) Date of publication of application: **07.01.2026**
(21) Application number: 24784087.9
(22) Date of filing: 25.03.2024
(51) Int. Cl.: H04L 67/51, H04L 67/52, H04L 67/566

(54) **COMMUNICATION METHOD AND COMMUNICATION APPARATUS**

(30) Priority: 06.04.2023 CN 202310396548
(71) Applicant: Huawei Technologies Co., Ltd., Shenzhen, Guangdong 518129 (CN)
(72) Inventor: ZANG, Xin, Shenzhen, Guangdong 518129 (CN); ZHOU, Runze, Shenzhen, Guangdong 518129 (CN); WANG, Yuan, Shenzhen, Guangdong 518129 (CN)
(74) Representative: Gill Jennings & Every LLP
(86) International application number: PCT/CN2024/083477
(87) International publication number: WO 2024/208002

(57) **Abstract**

A communication method and a communication apparatus are provided. According to the method, a time synchronization function network element may obtain an identifier of a serving access management network element of a terminal device, and may further determine whether a target access management network element set includes the serving access management network element of the terminal device. In this way, when determining that the target access management network element set includes the serving access management network element of the terminal device, the time synchronization function network element subscribes to, from the serving access management network element of the terminal device, whether a location of the terminal device is in a coverage area of a time synchronization service, to avoid initiating unnecessary subscription. The target access management network element set includes an access management network element that serves a TA in the coverage area of the time synchronization service.

## Description

This application claims priority to Chinese Patent Application No. 202310396548.1, filed with the China National Intellectual Property Administration on April 6, 2023 and entitled "COMMUNICATION METHOD AND COMMUNICATION APPARATUS", which is incorporated herein by reference in its entirety.

### TECHNICAL FIELD

Embodiments of this application relate to the communication field, and more specifically, to a communication method and a communication apparatus.

### BACKGROUND

A coverage area (coverage area)-based time synchronization method is proposed in the 3rd generation partnership project (3rd generation partnership project, 3GPP). The method may include: An application function (application function, AF) requests, based on a tracking area (tracking area, TA) list (TA list), a 5th generation (5th generation, 5G) system (5G system, 5GS) to start a time synchronization service for target user equipment (user equipment, UE); a time sensitive communication and time synchronization function (time sensitive communication and time synchronization function, TSCTSF) discovers a target access and mobility management function (access and mobility management function, AMF) for serving a TA in the TA list based on the TA list requested by the AF, and subscribes to, from the target AMF, whether a location of the target UE is in a service coverage area (which may also be referred to as an area of interest (area of interest, AoI)) of the time synchronization service requested by the AF; and if the location of the target UE is in the AoI, the TSCTSF starts an access stratum time synchronization indication, to indicate an access network device to provide reference time information for the target UE, or if the location of the target UE is not in the AoI, the TSCTSF disables the access stratum time synchronization indication.

However, in the foregoing method, when the TSCTSF subscribes to, from the target AMF, whether the location of the target UE is in the AoI, the subscription may fail, and whether to start the access stratum time synchronization indication cannot be determined.

### SUMMARY

Embodiments of this application provide a communication method, so that a time synchronization function network element can obtain an identifier of a serving access management network element of a terminal device, to prevent the time synchronization function network element from subscribing to, from a non-serving access management network element of the terminal device, whether the terminal device is located in a coverage area of a time synchronization service.

According to a first aspect, a communication method is provided. The method may be performed by a time synchronization function network element, or may be performed by a component (for example, a chip or a circuit) of the time synchronization function network element. This is not limited herein. For ease of description, the following uses an example in which the method is performed by the time synchronization function network element for description.

The method includes: The time synchronization function network element obtains an identifier of a first access management network element, where the first access management network element is a serving access management network element of a terminal device; and the time synchronization function network element determines whether a target access management network element set includes the first access management network element, where the target access management network element set includes an access management network element that serves a tracking area (tracking area, TA) in a coverage area of a time synchronization service.

Based on the foregoing technical solution, after obtaining the identifier of the first access management network element, the time synchronization function network element may determine whether the target access management network element set includes the first access management network element, which is equivalent to determining whether the first access management network element serves the TA in the coverage area of the time synchronization service, so that the time synchronization function network element determines whether to subscribe to, from the first access management network element, whether the terminal device is located in the coverage area of the time synchronization service. For example, if the target access management network element set does not include the first access management network element, the first access management network element does not serve the TA in the coverage area of the time synchronization service, and the time synchronization function network element does not initiate subscription to the first access management network element. Even if the time synchronization function network element initiates subscription to the first access management network element, because the first access management network element does not serve the TA in the coverage area of the time synchronization service, the first access management network element cannot determine whether a location of the terminal device is in the coverage area of the time synchronization service. In other words, the subscription initiated by the time synchronization function network element to the first access management network element is unnecessary subscription.

It should be understood that, if there are a plurality of access management network elements that serve the TA in the coverage area of the time synchronization service, the target access management network element set includes the plurality of access management network elements. For example, the TA in the coverage area of the time synchronization service includes a TA #1, a TA #2, a TA #3, and a TA #4. The first access management network element serves the TA #1 and the TA #2, and a second access management network element serves the TA #4 and the TA #4. In this case, the target management network element set includes the first access management network element and the second access management network element. If there is one access management network element that serves the TA in the coverage area of the time synchronization service, the target access management network element set includes the one access management network element. For example, the TA in the coverage area of the time synchronization service includes a TA #1 and a TA #2. The first access management network element serves the TA #1 and the TA #2. In this case, the target management network element set includes the first access management network element.

In a possible implementation, that the time synchronization function network element obtains the identifier of the first access management network element includes: The time synchronization function network element sends a first request message to a data management network element, where the first request message includes an identifier of the terminal device, and the first request message is used to request to obtain or discover the serving access management network element of the terminal device; and the time synchronization function network element receives a first request response message from the data management network element, where the first request response message includes the identifier of the first access management network element.

Optionally, the first request message further includes an identifier of the time synchronization function network element.

Based on the foregoing technical solution, if the first request message includes the identifier of the time synchronization function network element, the data management network element may determine, based on the identifier of the time synchronization function network element, whether to provide the identifier of the first access management network element for the time synchronization function network element. For example, if an association relationship between the identifier of the time synchronization function network element and the identifier of the terminal device is preconfigured in the data management network element, the data management network element may determine whether to provide the identifier of the first access management network element for the time synchronization function network element.

With reference to the first aspect, in some implementations of the first aspect, the method further includes: The time synchronization function network element receives information about the coverage area of the time synchronization service, where the information about the coverage area of the time synchronization service indicates a first TA list; and the time synchronization function network element determines the target access management network element set based on the information about the coverage area of the time synchronization service.

For example, the target access management network element set includes an access management network element that serves a TA in the first TA list. For example, any TA in the first TA list is served by an access management network element in the target access management network element set. In other words, for any TA #a in the first TA list, the target access management network element set includes an access management network element that serves the TA #a.

For example, that the time synchronization function network element receives the information about the coverage area of the time synchronization service includes: The time synchronization function network element receives time synchronization subscription data from the data management network element, where the time synchronization subscription data includes the information about the coverage area of the time synchronization service.

Optionally, the time synchronization subscription data further includes second indication information. The second indication information indicates to adjust, based on a registration area (registration area, RA) of the terminal device, an area in which the time synchronization service is activated.

Based on the foregoing technical solution, if the time synchronization subscription data further includes the second indication information, the time synchronization function network element may adjust, based on the second indication information, the area in which the time synchronization service is activated. For example, the time synchronization function network element determines to activate the time synchronization service in a TA in which the TA in the coverage area of the time synchronization service overlaps the RA of the terminal device, to avoid starting the time synchronization service outside the location of the terminal device and outside the coverage area of the time synchronization service.

With reference to the first aspect, in some implementations of the first aspect, the method further includes: If the target access management network element set includes the first access management network element, the time synchronization function network element sends a first subscription request message to the first access management network element, where the first subscription request message is used to subscribe to first information, the first information indicates whether the location of the terminal device is in a first area, and the first area is a TA served by the first access management network element in the coverage area of the time synchronization service; or if the target access management network element set does not include the first access management network element, the time synchronization function network element skips subscribing to the first information from the first access management network element.

Based on the foregoing technical solution, if the target access management network element set includes the first access management network element, it indicates that the first access management network element serves the TA in the coverage area of the time synchronization service, and the time synchronization function network element sends the first subscription request message to the first access management network element, to subscribe to whether the location of the terminal device is in the coverage area of the time synchronization service, so that deployment of the time synchronization service for the terminal device based on the location of the terminal device can be facilitated. If the target access management network element set does not include the first access management network element, it indicates that the first access management network element serves the TA in the coverage area of the time synchronization service. In this case, the time synchronization function network element does not send the first subscription request message to the first access management network element, so that initiation of unnecessary subscription can be avoided.

With reference to the first aspect, in some implementations of the first aspect, after the time synchronization function network element sends the first subscription request message to the first access management network element, the method further includes: The time synchronization function network element receives a first subscription notification message from the first access management network element, where the first subscription notification message notifies whether the location of the terminal device is in a second area, the second area is the first area or a first RA, and the first RA is an RA set by the first access management network element for the terminal device; and the time synchronization function network element sends second information to a policy control network element when the first subscription notification message notifies that the location of the terminal device is in the second area, where the second information indicates to activate the time synchronization service in a third area, and the third area is a TA in which the first RA overlaps the first area.

Based on the foregoing technical solution, the time synchronization function network element sends the second information to the policy control network element, so that the policy control network element sends fourth information to the first access management network element according to the second information, where the fourth information is used to determine to activate the time synchronization service in the third area, so that the first access management network element activates the time synchronization service in the third area based on the fourth information. In comparison with a manner of activating the time synchronization service in the first area or the first RA, in the foregoing technical solution, an area for activating the time synchronization service can be accurately controlled. This avoids activating the time synchronization service outside the location of the terminal device, and avoids activating the time synchronization service outside the coverage area of the time synchronization service, so that signaling consumption and air interface resources can be reduced.

With reference to the first aspect, in some implementations of the first aspect, after the time synchronization function network element sends the first subscription request message to the first access management network element, the method further includes: The time synchronization function network element receives a second subscription notification message from a second access management network element, where the second subscription notification message notifies whether the location of the terminal device is in the second area, the second area is the first area or the first RA, the first RA is an RA set by the first access management network element for the terminal device, and the second access management network element is the serving access management network element of the terminal device; and the time synchronization management network element determines whether the target access management network element set includes the second access management network element.

Based on the foregoing technical solution, if the time synchronization function network element receives the second subscription notification message from the second access management network element, when determining that the serving access management network element of the terminal device is switched from the first access management network element to the second access management network element, the time synchronization function network element may determine whether the target access management network element set includes the second access management network element, which is equivalent to determining whether the second access management network element serves the TA in the coverage area of the time synchronization service, so that the time synchronization function network element determines whether to subscribe to, from the second access management network element, whether the location of the terminal device is in the coverage area of the time synchronization service.

With reference to the first aspect, in some implementations of the first aspect, the method further includes: If the target access management network element set includes the second access management network element, the time synchronization function network element sends a second subscription request message to the second access management network element, where the second subscription request message is used to subscribe to third information, the third information indicates whether the location of the terminal device is in a fourth area, and the fourth area is a TA served by the second access management network element in the coverage area of the time synchronization service; or if the target access management network element set does not include the second access management network element, the time synchronization function network element sends a subscription cancellation request message to the second access management network element, where the subscription cancellation request message is used to cancel subscription to the first information.

Based on the foregoing technical solution, if the target access management network element set includes the second access management network element, it indicates that the second access management network element serves the TA in the coverage area of the time synchronization service, and the time synchronization function network element sends the second subscription request message to the second access management network element, to subscribe to whether the location of the terminal device is in the coverage area of the time synchronization service, so that deployment of the time synchronization service for the terminal device based on the location of the terminal device can be facilitated. If the target access management network element set does not include the second access management network element, it indicates that the second access management network element serves the TA in the coverage area of the time synchronization service. In this case, the time synchronization function network element sends the subscription cancellation request message to the second access management network element, so that an unnecessary subscription procedure can be avoided, and signaling and resource consumption can be reduced.

According to a second aspect, a communication method is provided. The method may be performed by a first access management network element, or may be performed by a component (for example, a chip or a circuit) of the first access management network element. This is not limited. For ease of description, the following uses an example in which the method is performed by the first access management network element for description.

The method includes: The first access management network element obtains fourth information, where the fourth information is used to determine to activate a time synchronization service in a third area, the third area is a TA in which a first RA overlaps a first area, the first RA is an RA set by the first access management network element for a terminal device, and the first area is a TA served by the first access management network element in a coverage area of the time synchronization service; the first access management network element determines the third area based on the first RA and the first area; and the first access management network element activates the time synchronization service in the third area.

Based on the foregoing technical solution, the first access management network element activates the time synchronization service in the third area based on the fourth information. In comparison with a manner of activating the time synchronization service in the first area or the first RA, an area for activating the time synchronization service can be accurately controlled. This avoids activating the time synchronization service outside the location of the terminal device, and avoids activating the time synchronization service outside the coverage area of the time synchronization service, so that signaling consumption and air interface resources can be reduced.

With reference to the second aspect, in some implementations of the second aspect, that the first access management network element obtains the fourth information includes: The first access management network element receives the fourth information from a policy control network element.

With reference to the second aspect, in some implementations of the second aspect, the fourth information is access and mobility subscription data of the terminal device, and that the first access management network element obtains the fourth information includes: The first access management network element receives the access and mobility subscription data from a data management network element, where the access and mobility subscription data includes information about the coverage area of the time synchronization service.

With reference to the second aspect, in some implementations of the second aspect, the access and mobility subscription data further includes third indication information, and the third indication information indicates to adjust an area of the time synchronization service based on an RA of the terminal device.

According to a third aspect, a communication method is provided. The method may be performed by a first access management network element, or may be performed by a component (for example, a chip or a circuit) of the first access management network element. This is not limited. For ease of description, the following uses an example in which the method is performed by the first access management network element for description.

The method includes: The first access management network element obtains access and mobility subscription data of a terminal device, where the access and mobility subscription data includes information about a coverage area of an access stratum time synchronization service to which the terminal device subscribes; the first access management network element sets a first RA for the terminal device based on the coverage area of the access stratum time synchronization service, where the first RA is the coverage area of the access stratum time synchronization service or at least one TA in the coverage area of the access stratum time synchronization service; and the first access management network element activates the access stratum time synchronization service in the first RA.

Based on the foregoing technical solution, the first access management network element sets the first RA for the terminal device based on the coverage area of the access stratum time synchronization service to which the terminal device subscribes, and activates the access stratum time synchronization service in the first RA, so that the access stratum time synchronization service can be activated for the terminal device in the coverage area of the access stratum time synchronization service.

According to a fourth aspect, a communication method is provided. The method may be performed by a first access management network element, or may be performed by a component (for example, a chip or a circuit) of the first access management network element. This is not limited. For ease of description, the following uses an example in which the method is performed by the first access management network element for description.

The method includes: The first access management network element obtains access and mobility subscription data of a terminal device, where the access and mobility subscription data includes information about a coverage area of an access stratum time synchronization service to which the terminal device subscribes; if a TA served by the first access management network element does not overlap a TA in the coverage area of the access stratum time synchronization service, the first access management network element sends a second request message to a network repository function network element, where the second request message includes information about the coverage area of the access stratum time synchronization service, the second request message is used to request to obtain or discover at least one target access management network element, and the target access management network element serves at least one TA in the coverage area of the access stratum time synchronization service; the first access management network element receives a second request response message from the network repository function network element, where the second request response message includes an identifier of the at least one target access management network element; and the first access management network element determines a serving access management network element of the terminal device based on the identifier of the at least one target access management network element.

Based on the foregoing technical solution, the first access management network element may reselect the serving access management network element for the terminal device based on the coverage area of the access stratum time synchronization service, and the serving access management network element reselected by the first access management network element for the terminal device serves at least one TA in the coverage area of the time synchronization service, so that the serving access management network element reselected by the first access management network element for the terminal device can activate the time synchronization service for the terminal device.

With reference to the fourth aspect, in some implementations of the fourth aspect, the information about the coverage area of the access stratum time synchronization service indicates a first TA list, and the target access management network element serves at least one TA in the first TA list.

According to a fifth aspect, a communication apparatus is provided. The communication apparatus may be a time synchronization function network element or a component in a time synchronization function network element. The communication apparatus may include modules or units configured to perform the method according to any one of the first aspect and the possible implementations of the first aspect.

According to a sixth aspect, a communication apparatus is provided. The communication apparatus may be a first access management network element or a component in a first access management network element. The communication apparatus may include modules or units configured to perform the method according to any one of the second aspect to the fourth aspect and the possible implementations of the second aspect to the fourth aspect.

According to a seventh aspect, a communication apparatus is provided, and includes a processor. The processor is coupled to a memory, and may be configured to execute instructions in the memory, to implement the method according to any one of the first aspect and the possible implementations of the first aspect. Optionally, the communication apparatus further includes the memory. Optionally, the communication apparatus further includes a communication interface, and the processor is coupled to the communication interface.

In an implementation, the communication apparatus is a time synchronization function network element. When the communication apparatus is the time synchronization function network element, the communication interface may be a transceiver or an input/output interface.

In another implementation, the communication apparatus is a chip disposed in a time synchronization function network element. When the communication apparatus is the chip disposed in the time synchronization function network element, the communication interface may be an input/output interface.

According to an eighth aspect, a communication apparatus is provided, and includes a processor. The processor is coupled to a memory, and may be configured to execute instructions in the memory, to implement the method according to any one of the second aspect to the fourth aspect and the possible implementations of the second aspect to the fourth aspect. Optionally, the communication apparatus further includes the memory. Optionally, the communication apparatus further includes a communication interface, and the processor is coupled to the communication interface.

In an implementation, the communication apparatus is a first access management network element. When the communication apparatus is the first access management network element, the communication interface may be a transceiver or an input/output interface.

In another implementation, the communication apparatus is a chip disposed in a first access management network element. When the communication apparatus is the chip disposed in the first access management network element, the communication interface may be an input/output interface.

Optionally, the transceiver may be a transceiver circuit. Optionally, the input/output interface may be an input/output circuit.

According to a ninth aspect, a processor is provided, and includes an input circuit, an output circuit, and a processing circuit. The processing circuit is configured to: receive a signal by using the input circuit, and transmit a signal by using the output circuit, so that the processor performs the method according to any one of the possible implementations of the first aspect to the fourth aspect.

In a specific implementation process, the processor may be one or more chips, the input circuit may be an input pin, the output circuit may be an output pin, and the processing circuit may be a transistor, a gate circuit, a trigger, any logic circuit, or the like. An input signal received by the input circuit may be, for example but not limited to, received and input by a receiver. A signal output by the output circuit may be, for example but not limited to, output to a transmitter and transmitted by the transmitter. The input circuit and the output circuit may be a same circuit, where the circuit is used as an input circuit or an output circuit in different time. Specific implementations of the processor and various circuits are not limited in embodiments of this application.

According to a tenth aspect, a processing apparatus is provided, including a processor and a memory. The processor is configured to: read instructions stored in the memory, receive a signal by using a receiver, and transmit a signal by using a transmitter, to perform the method according to any one of the possible implementations of the first aspect to the fourth aspect.

Optionally, there are one or more processors, and there are one or more memories.

Optionally, the memory may be integrated with the processor, or the memory and the processor are separately disposed.

In a specific implementation process, the memory may be a non-transitory (non-transitory) memory, such as a read-only memory (read-only memory, ROM). The memory and the processor may be integrated into one chip, or may be separately disposed on different chips. A type of the memory and a manner in which the memory and the processor are disposed are not limited in embodiments of this application.

It should be understood that a related data exchange process, for example, sending a first subscription request message may be a process of outputting the first subscription request message from the processor, and receiving the first subscription notification message may be a process of receiving the input first subscription notification message by the processor. Specifically, data output by the processor may be output to the transmitter, and input data received by the processor may be from the receiver. The transmitter and the receiver may be collectively referred to as a transceiver.

The processing apparatus in the tenth aspect may be one or more chips. The processor in the processing apparatus may be implemented by using hardware, or may be implemented by using software. When the processor is implemented by using hardware, the processor may be a logic circuit, an integrated circuit, or the like. When the processor is implemented by using software, the processor may be a general-purpose processor, and is implemented by reading software code stored in the memory. The memory may be integrated into the processor, or may be located outside the processor and exist independently.

According to an eleventh aspect, a computer program product is provided. The computer program product includes a computer program (which may also be referred to as code or instructions). When the computer program is run, a computer is enabled to perform the method according to any one of the possible implementations of the first aspect to the fourth aspect.

According to a twelfth aspect, a computer-readable storage medium is provided, where the computer-readable storage medium stores a computer program (which may also be referred to as code or instructions), and when the computer program is run on a computer, the method according to any one of the possible implementations of the first aspect to the fourth aspect is performed.

According to a thirteenth aspect, a communication system is provided, including the foregoing time synchronization function network element and the first access management network element, where the time synchronization function network element is configured to perform the method according to any one of the first aspect and the possible implementations of the first aspect, and the first access management network element is configured to perform the method according to any one of the second aspect and the possible implementations of the second aspect.

### BRIEF DESCRIPTION OF DRAWINGS

FIG. 1 is a diagram of a communication system applicable to a method according to an embodiment of this application;
FIG. 2 is a schematic flowchart of a communication method according to this application;
FIG. 3A and FIG. 3B are a schematic flowchart of a communication method according to this application;
FIG. 4 is a schematic flowchart of a communication method according to this application;
FIG. 5 is a block diagram of a communication device according to an embodiment of this application; and
FIG. 6 is a block diagram of a communication apparatus according to an embodiment of this application.

### DESCRIPTION OF EMBODIMENTS

The technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) system, a new radio (new radio, NR) system, a 6th generation (6th generation, 6G) system, or a future communication system. The 5G mobile communication system in this application includes a non-standalone (non-standalone, NSA) 5G mobile communication system or a standalone (standalone, SA) 5G mobile communication system. The communication system may alternatively be a public land mobile network (public land mobile network, PLMN), a sidelink (sidelink, SL) communication system, a machine-to-machine (machine-to-machine, M2M) communication system, an internet of things (Internet of things, IoT) communication system, a vehicle to everything (vehicle to everything, V2X) communication system, an uncrewed aerial vehicle (uncrewed aerial vehicle, UAV) communication system, or another communication system.

The following describes the technical solutions in embodiments of this application with reference to the accompanying drawings in embodiments of this application. Specifically, in the descriptions of this application, unless otherwise specified, "/" indicates that associated objects are in an "or" relationship, for example, A/B may mean "A or B". "and/or" used in this application is only used to describe an association relationship between associated objects, and indicates that three relationships may exist. For example, "A and/or B" may indicate the following three cases: Only A exists, both A and B exist, and only B exists, where A and B may be singular or plural. In addition, in the descriptions of this application, "a plurality of" means two or more than two unless otherwise specified. At least one of the following items (pieces) or a similar expression thereof indicates any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural. In addition, to clearly describe the technical solutions in embodiments of this application, words such as "first" and "second" are used in embodiments of this application to distinguish between same items or similar items that have basically the same functions or purposes. A person skilled in the art may understand that the words such as "first" and "second" limit neither of a quantity and an execution sequence, and the words such as "first" and "second" do not indicate a definite difference either. In addition, in embodiments of this application, terms such as "example" or "for example" are used to represent giving an example, an illustration, or a description. Any embodiment or technical solution described as "example" or "for example" in embodiments of this application should not be construed as being more preferential or advantageous than other embodiments or technical solutions. Exactly, use of the terms such as "example" or "for example" is intended to present a related concept in a specific manner for ease of understanding.

In addition, a network architecture and a service scenario that are described in embodiments of this application are intended to describe the technical solutions in embodiments of this application more clearly, but constitute no limitation on the technical solutions provided in embodiments of this application. A person of ordinary skill in the art may know that, with evolution of the network architecture and emergence of new service scenarios, the technical solutions provided in embodiments of this application are also applicable to similar technical problems.

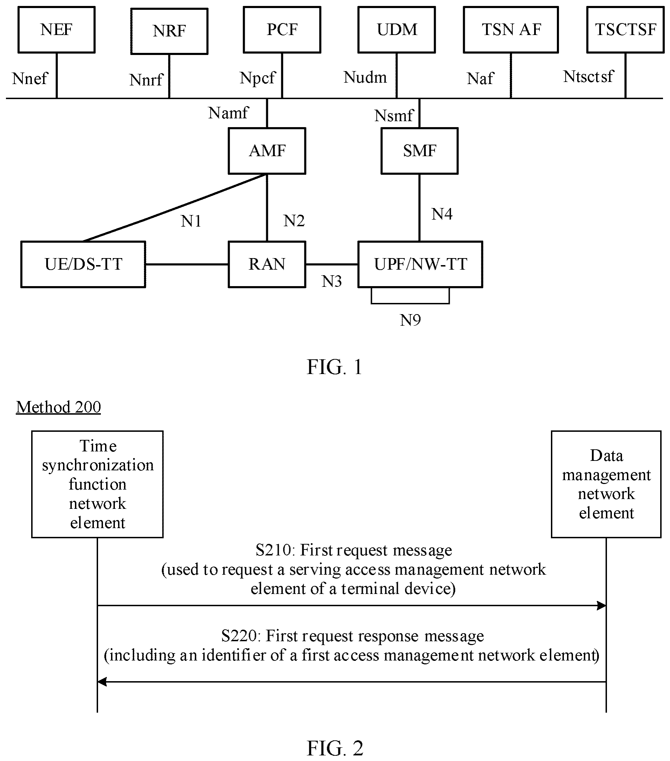

For ease of understanding of embodiments of this application, a system architecture to which embodiments of this application are applicable is first described in detail with reference to FIG. 1.

The system architecture shown in FIG. 1 may include the following devices.
1. User equipment (user equipment, UE), also referred to as a terminal device, is a device that provides voice/data connectivity for a user, for example, a handheld device or a vehicle-mounted device with a wireless connection function. Currently, examples of some terminals may be as follows: a mobile phone (mobile phone), a tablet computer (pad), a computer (for example, a laptop or a palmtop computer) with a wireless transceiver function, a mobile internet device (mobile Internet device, MID), a virtual reality (virtual reality, VR) device, an augmented reality (augmented reality, AR) device, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device, another processing device connected to a wireless modem, an in-vehicle device, a wearable device, a terminal device in a 5G network, or a terminal device in a future evolved PLMN.

The wearable device may also be referred to as a wearable intelligent device, and is a general term of wearable devices, such as glasses, gloves, watches, clothes, and shoes, that are developed by applying wearable technologies to intelligent designs of daily wear. The wearable device is a portable device that is directly worn on a body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement all or a part of functions without depending on smartphones, for example, smart watches or smart glasses, and include devices that focus on only one type of application function and need to collaboratively work with other devices such as smartphones, for example, various smart bands or smart jewelry for monitoring physical signs.

In addition, the terminal device may alternatively be a terminal device in an internet of things (Internet of things, IoT) system. An IoT is an important part in future development of information technologies. A main technical feature of the IoT is to connect things to a network by using a communication technology, to implement an intelligent network for human-machine interconnection and thing-thing interconnection. In an IoT technology, massive connections, deep coverage, and power saving of a terminal may be implemented by using, for example, a narrowband (narrowband, NB) technology.

As shown in FIG. 1, a device-side time sensitive network (time sensitive network, TSN) translator (device-side TSN translator, DS-TT) may be deployed on UE, and the DS-TT is configured to connect to a TSN system on a terminal side, to implement a user plane feature of a TSN switching node, for example, topology discovery and a scheduling rule created by a TSN control plane.

It should be noted that FIG. 1 is described by using an example in which the DS-TT and the UE are deployed together, and the DS-TT may alternatively be deployed independently.

2. An access network (access network, AN) is used to provide a network access function for an authorized user in a specific area, and can use transmission tunnels with different quality based on user levels, service requirements, and the like. The access network may be an access network using different access technologies. Conventional access network technologies include: a radio access network technology used in a 3rd generation (3rd generation, 3G) system, a radio access network technology used in a 4th generation (4th generation, 4G) system, or a next generation radio access network (next generation radio access network, NG-RAN) technology (for example, a radio access network technology used in a 5G system).

An access network that implements an access network function based on a wireless communication technology may be referred to as a radio access network (radio access network, RAN). The radio access network can manage radio resources, provide an access service for a terminal, and further complete forwarding of a control signal and user data between a terminal and a core network.

The radio access network device may be, for example, a base station (NodeB), an evolved base station (evolved NodeB, eNB or eNodeB), a next generation node base station (next generation Node Base station, gNB) in a 5G mobile communication system, a base station in a future mobile communication system, an access point (access point, AP) in a Wi-Fi wireless hotspot system, or the like, or may be a radio controller in a cloud radio access network (cloud radio access network, CRAN) scenario. Alternatively, the radio access network device may be a relay station, an access point, a vehicle-mounted device, an uncrewed aerial vehicle, a wearable device, a network device in a 5G network, a network device in an evolved PLMN, or the like. A specific technology and a specific device form that are used by the radio access network device are not limited in embodiments of this application.

3. An access management network element is mainly used for mobility management and access management, is responsible for transferring a user policy between user equipment and a policy control function (policy control function, PCF) network element, and may be configured to implement a function other than session management in a mobility management entity (mobility management entity, MME) function, for example, an access authorization (authentication) function.

In a 5G communication system, the access management network element may be an access and mobility management function (access and mobility management function, AMF) network element. In a future communication system, the access management network element may be the AMF network element, or may have another name. This is not limited in this application.

4. A session management network element is mainly configured to: manage a session, allocate and manage an internet protocol (internet protocol, IP) address of user equipment, select an endpoint that can manage a user plane function interface and a policy control and charging function interface, perform downlink data communication, and the like.

In the 5G communication system, the session management network element may be a session management function (session management function, SMF) network element. In the future communication system, the session management network element may be an SMF network element, or may have another name. This is not limited in this application.

5. A user plane network element is configured to: perform packet routing and forwarding, perform quality of service (quality of service, QoS) processing on user plane data, complete user plane data forwarding, perform session/flow-level charging statistics collection, implement a bandwidth limiting function, and the like.

In the 5G communication system, the user plane network element may be a user plane function (user plane function, UPF) network element. In the future communication system, the user plane network element may be a UPF network element, or may have another name. This is not limited in this application.

As shown in FIG. 1, a network-side TSN translator (network-side TSN translator, NW-TT) may be deployed on the UPF, and the NW-TT is configured to connect to a TSN system on a network side, to implement a user plane feature of a TSN switching node, for example, topology discovery and a scheduling rule created by a TSN control plane.

It should be noted that FIG. 1 is described by using an example in which the NW-TT and the UPF are deployed together, and the NW-TT may alternatively be deployed independently.

6. A policy control network element is a unified policy framework for guiding a network behavior, and provides policy rule information and the like for a control plane function network element (for example, an AMF network element or an SMF network element).

In the 4G communication system, the policy control network element may be a policy and charging rules function (policy and charging rules function, PCRF) network element. In the 5G communication system, the policy control network element may be a PCF network element. In the future communication system, the policy control network element may be a PCF network element, or may have another name. This is not limited in this application.

7. A data management network element is configured to perform user equipment identification handling, access authentication, registration, mobility management, and the like.

In the 4G communication system, the data management network element may be a home subscriber server (home subscriber server, HSS) network element. In the 5G communication system, the data management network element may be a unified data management (unified data management, UDM) network element. In the future communication system, the data management network element may be a UDM network element, or may have another name. This is not limited in this application.

8. A network exposure function (network exposure function, NEF) network element is configured to securely open up, to the outside, a service and a capability that are provided by a 3rd generation partnership project (3rd generation partnership project, 3GPP) network function.

9. A TSN application function (application function, AF) network element is configured to connect to a centralized network configuration (centralized network configuration, CUC) entity in a TSN network and provide a specific application layer service for UE.

10. A network repository function (network repository function, NRF) network element may be configured to provide network element information corresponding to a network element type based on a request of another network element by using a network element discovery function. The NRF may further provide network element management services such as network element registration, update, and deregistration, and network element status subscription and push.

11. A time sensitive communication and time synchronization function (time sensitive communication and time synchronization function, TSCTSF) network element implements a capability of deterministic forwarding management in a 5G communication system.

N1, N2, N3, N4, N9, Nnef, Nnrf, Npcf, Nudm, Naf, Ntsctsf, Namf, and Nsmf in FIG. 1 are interface sequence numbers. Alternatively, meanings of these interface sequence numbers, refer to definitions in the 3GPP technical specification (technology specification, TS) 23.501.

It should be understood that the foregoing network architecture used in embodiments of this application is merely an example for description, and a network architecture applicable to embodiments of this application is not limited thereto. Any network architecture that can implement the functions of the foregoing network elements is applicable to embodiments of this application.

It should be further understood that an AMF, an SMF, an UPF, a NEF, a PCF, n UDM, an NRF, a TSCTSF, and the like shown in FIG. 1 may be understood as network elements configured to implement different functions in a core network, for example, may be combined as required to form a network slice. These core network elements may be independent devices, or may be integrated into a same device to implement different functions. A specific form of the foregoing network elements is not limited in this application.

It should be further understood that the foregoing names are defined merely for distinguishing between different functions, and should not constitute any limitation on this application. This application does not exclude a possibility that another name is used in the 5G network and another future network. For example, in the 6G network, a part or all of the foregoing network elements may still use terms in 5G, or may use other names. A name of an interface between network elements in FIG. 1 is merely an example. In specific implementation, the name of the interface may be another name. This is not limited in this application.

A time synchronization method based on a coverage area (coverage area) is proposed in the 3GPP. The method may include: An AF requests, based on a tracking area (tracking area, TA) list (TA list), a 5G system (5G system, 5GS) to start a time synchronization service for target UE; a TSCTSF discovers, from a NRF, one or more target AMFs for serving a TA in the TA list based on the TA list requested by the AF, and subscribes to, from the one or more target AMFs, whether a location of the target UE is in a service coverage area (which may also be referred to as an area of interest (area of interest, AoI)) of the time synchronization service requested by the AF; and if the location of the target UE is in the AoI, the TSCTSF starts an access stratum time synchronization indication, to indicate an access network device to provide reference time information (reference time information) for the target UE; or if the location of the target UE is not in the AoI, the TSCTSF disables the access stratum time synchronization indication.

However, in the foregoing method, the one or more target AMFs discovered by the TSCTSF from the NRF may not include a serving AMF (serving AMF) of the target UE. Therefore, even if the TSCTSF subscribes to, from the one or more target AMFs, whether the location of the target UE is in the AoI, the TSCTSF cannot know whether the location of the target UE is in the AoI, and cannot determine whether to start the access stratum time synchronization indication.

In view of this, an embodiment of this application provides a communication method, so that a time synchronization function network element can obtain an identifier of a serving access management network element of a terminal device. In this way, the time synchronization function network element subscribes to, from the serving access management network element of the terminal device, whether a location of the terminal device is in a coverage area of a time synchronization service, to deploy the time synchronization service for the terminal device based on the location of the terminal device.

It should be noted that the time synchronization function network element described in the following embodiments may be a TSCTSF, the data management network element may be a UDM, the network repository function network element may be an NRF, the application function network element may be an AF, the access management network element may be an AMF, and the policy control network element may be a PCF.

FIG. 2 is a schematic flowchart of a communication method 200 according to an embodiment of this application. As shown in FIG. 2, the method 200 may include the following steps.

S210: A time synchronization function network element sends a first request message to a data management network element.

Correspondingly, the data management network element receives the first request message from the time synchronization function network element.

The first request message is used to request a serving access management network element of a terminal device, or the first request message is used to request to obtain or discover a serving access management network element of a terminal device, or the first request message is used to request to subscribe to a serving access management network element of a terminal device.

For example, the first request message includes an identifier of the terminal device, and the identifier of the terminal device may include one or more of the following: an international mobile subscriber identity (international mobile subscriber identity, IMSI), an international mobile equipment identity (international mobile equipment identity, IMEI), a subscription permanent identifier (subscription permanent identifier, SUPI), a generic public subscription identifier (generic public subscription identifier, GPSI), a subscription concealed identifier (subscription concealed identifier, SUCI), a 5G globally unique temporary identifier (5G globally unique temporary identifier, 5G-GUTI), a 4G globally unique temporary identifier (4G globally unique temporary identifier, 4G GUTI), or an IP quintuple.

Optionally, the first request message further includes an identifier of the time synchronization function network element. The identifier of the time synchronization function network element may include one or more of the following: an identifier (identifier, ID) of the time synchronization function network element, and an address of the time synchronization function network element, for example, an IP address.

For example, the time synchronization function network element sends the first request message to the data management network element by invoking an Nudm_UE context management (context management, CM) _Get Req (Nudm_UECM_Get Req) service.

S220: The data management network element sends a first request response message to the time synchronization function network element.

Correspondingly, the time synchronization function network element receives the first request response message from the data management network element.

The first request response message includes an identifier of a first access management network element, and the first access management network element is a serving access management network element of the terminal device. For example, the identifier of the first access management network element may include one or more of the following: an ID of the first access management network element, for example, a globally unique AMF identifier (global unique AMF identifier, GUAMI); and an address of the first access management network element, for example, an IP address.

After receiving the first request message, the data management network element queries the serving access management network element of the terminal device based on the identifier that is of the terminal device and that is included in the first request message, and sends the first request response message to the time synchronization function network element.

Optionally, if the first request message includes the identifier of the time synchronization function network element, the data management network element may determine, based on the identifier of the time synchronization function network element, whether to provide the identifier of the first access management network element for the time synchronization function network element. If the data management network element determines to provide the identifier of the first access management network element to the time synchronization function network element, the data management network element sends the first request response message to the time synchronization function network element. For example, if an association relationship between the identifier of the time synchronization function network element and the identifier of the terminal device is preconfigured in the data management network element, the data management network element may determine whether to provide the identifier of the first access management network element for the time synchronization function network element.

For example, the data management network element sends the first request response message to the time synchronization function network element by invoking a Nudm_UECM_Get Resp (Nudm_UECM_Get Resp) service.

Optionally, if the first request message is used to request to subscribe to the serving access management network element of the terminal device or is used to request to subscribe to a change notification of the serving access management network element of the terminal device, after the data management network element sends the first request response message to the time synchronization function network element, if the serving access management network element of the terminal device changes, for example, the serving access management network element of the terminal device is switched from the first access management network element to a second access management network element, the data management network element may send a notification message to the time synchronization function network element, where the notification message includes an identifier of the second access management network element. For example, the identifier of the second access management network element may include one or more of the following: an ID of the second access management network element, for example, a GUAMI; and an address of the second access management network element, for example, an IP address.

In this embodiment of this application, the time synchronization function network element may request the data management network element to obtain or discover the serving access management network element of the terminal device, to determine the serving access management network element of the terminal device. When the time synchronization function network element determines the serving access management network element of the terminal device, the time synchronization function network element may subscribe to location information of the terminal device from the serving access management network element of the terminal device, so that the time synchronization function network element deploys a time synchronization service for the terminal device based on a location of the terminal device.

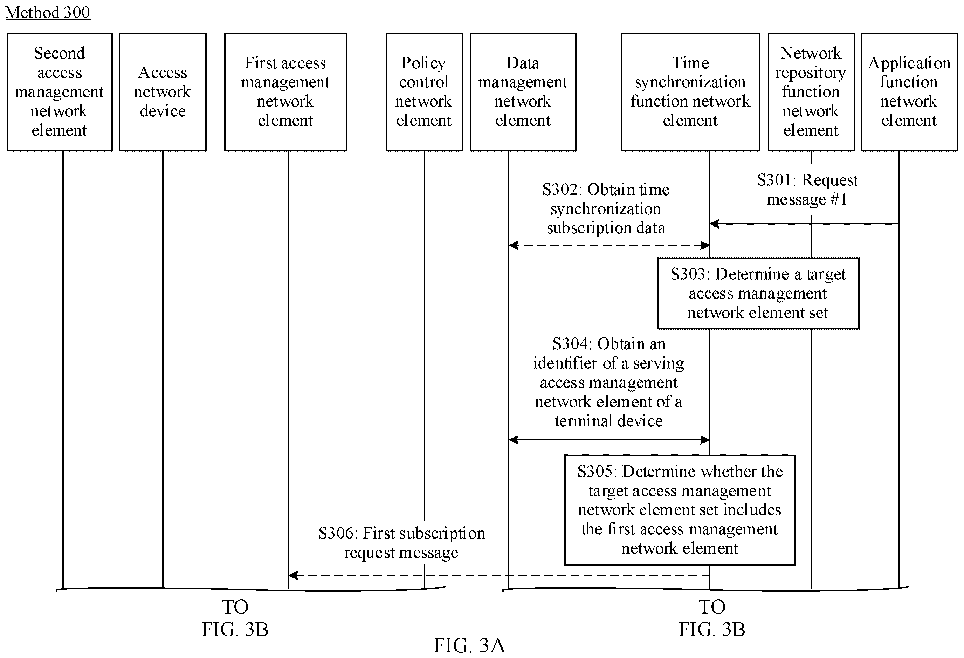

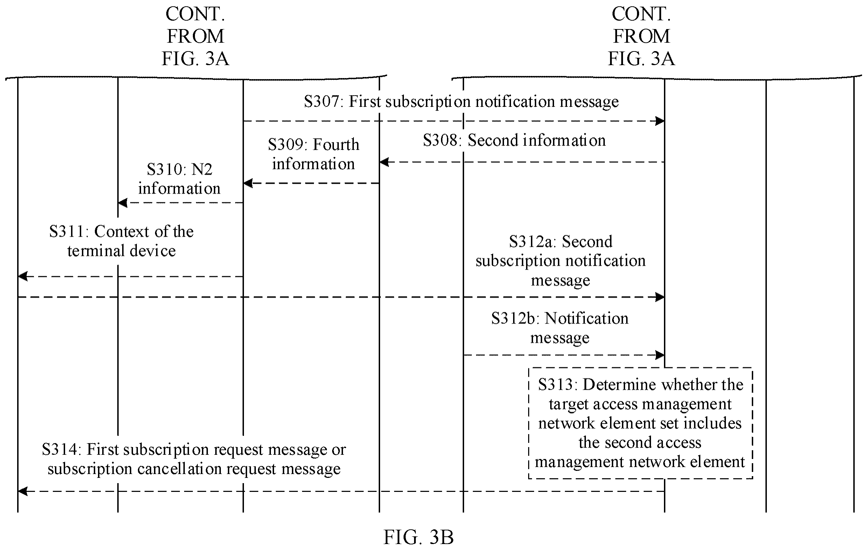

With reference to FIG. 3A and FIG. 3B, the following describes a manner in which a time synchronization function network element deploys a time synchronization service for a terminal device based on a location of the terminal device.

FIG. 3A and FIG. 3B are a schematic flowchart of a communication method 300 according to an embodiment of this application. As shown in FIG. 3A and FIG. 3B, the method 300 may include the following steps.

S301: An application function network element sends a request message #1 to a time synchronization function network element.

Correspondingly, the time synchronization function network element receives the request message #1 from the application function network element.

The request message #1 is used to request to activate a time synchronization service for a terminal device. For example, the time synchronization service is an access stratum time synchronization service.

The request message #1 includes an identifier of the terminal device. For the identifier of the terminal device, refer to the description in S210 in the method 200.

Optionally, the request message #1 further includes information about a coverage area (coverage area) of the time synchronization service, and the information about the coverage area of the time synchronization service indicates the coverage area of the time synchronization service. For example, the information about the coverage area of the time synchronization service may include one or more of the following: coordinate information, a geographical area identifier, address information, a tracking area (tracking area) identifier (TA identifier, TAI), and a cell (cell) ID.

The coverage area of the time synchronization service indicates a first TA list (list). In other words, the first TA list may be determined based on the information about the coverage area of the time synchronization service. For example, when the information about the coverage area of the time synchronization service includes the geographical area identifier, the first TA list determined based on the geographical area identifier includes a TA in a geographic area identified by the geographical area identifier. For another example, when the information about the coverage area of the time synchronization service includes the TAI, the first TA list determined based on the TAI includes a TA identified by the TAI. For another example, when the information about the coverage area of the time synchronization service includes the cell ID, a TA in the first TA list determined based on the cell ID includes a cell identified by the cell ID. For example, the information about the coverage area of the time synchronization service includes a cell ID of a cell #1, a cell ID of a cell #2, a cell ID of a cell #3, and a cell ID of a cell #4. The cell #1 belongs to a TA #1, the cell #2 belongs to a TA #2, the cell #3 belongs to a TA #3, and the cell #4 belongs to a TA #4. In this case, the first TA list includes the TA #1 to the TA #4.

Optionally, the request message #1 further includes indication information #1, where the indication information #1 indicates to create a time synchronization service, or the indication information #1 indicates to delete a time synchronization service. If the indication information #1 indicates to create the time synchronization service, it indicates that the request message #1 is used to request to create the time synchronization service for the terminal device. For example, the indication information #1 may be named as a 5G access stratum time distribution indication (5G access stratum time distribution indication). If a value of the 5G access stratum time distribution indication is "create (create)", it indicates that the 5G access stratum time distribution indication indicates to create the time synchronization service. If a value of the 5G access stratum time distribution indication is "delete (delete)", it indicates that the 5G access stratum time distribution indication indicates to delete the time synchronization service.

Optionally, the request message #1 further includes a first error, and the first error is an upper limit of a time synchronization error introduced by a 5GS. For example, the first error may be referred to as a time synchronization error budget (time synchronization error budget).

Optionally, the request message #1 further includes a temporal validity condition (temporal validity condition), and the temporal validity condition indicates start time and/or end time of the time synchronization service.

In a possible implementation, the application function network element may send the request message #1 to the time synchronization function network element through a network exposure function network element.

For example, the application function network element may send a request message #2 to the network exposure function network element by invoking an Nnef_access stratum time indication (access stratum time indication, ASTI)_Creat Request (Nnef_ASTI_Creat Request) service, and then the network exposure function network element sends the request message #1 to the time synchronization function network element by invoking an Ntsctsf_ASTI_Creat Request (Ntsctsf_ASTI_Creat Request) service. The request message #1 sent by the network exposure function network element to the time synchronization function network element is determined by the network exposure function network element based on the request message #2.

For another example, the application function network element may send the request message #1 to the network exposure function network element by invoking an Nnef_ASTI_Update Request (Nnef_ASTI_Update Request) service, and then the network exposure function network element sends the request message #1 to the time synchronization function network element by invoking an Ntsctsf_ASTI_Update Request (Ntsctsf_ASTI_Update Request) service.

For example, the request message #2 sent by the application function network element to the network exposure function network element includes external information about the coverage area of the time synchronization service, and the external information about the coverage area of the time synchronization service includes one or more of the following: coordinate information, a geographical area identifier, and address information. The network exposure function network element maps the external information about the coverage area of the time synchronization service to internal information about the coverage area of the time synchronization service, and then sends the request message #1 to the time synchronization function network element. The request message #1 includes the internal information about the coverage area of the time synchronization service. The internal information about the coverage area of the time synchronization service includes one or more of the following: a TAI or a cell ID.

In a possible implementation, if the application function network element is a trusted (trusted) application function network element, the application function network element may directly send the request message #1 to the time synchronization function network element. For example, the application function network element may send the request message #1 to the time synchronization function network element by invoking the Ntsctsf_ASTI_Creat Request service. For another example, the application function network element may send the request message #1 to the time synchronization function network element by invoking the Ntsctsf_ASTI_Update Request service.

For example, the request message #1 sent by the application function network element to the time synchronization function network element includes the internal information about the coverage area of the time synchronization service.

Optionally, if the request message #1 does not include the information about the coverage area of the time synchronization service, the method 300 further includes S302.

S302: The time synchronization function network element obtains time synchronization subscription data (time synchronization subscription data) from the data management network element.

The time synchronization subscription data includes the information about the coverage area of the time synchronization service to which the terminal device subscribes. For example, the time synchronization subscription data includes the internal information about the coverage area of the time synchronization service to which the terminal device subscribes.

Optionally, the time synchronization subscription data further includes second indication information. The second indication information indicates to adjust (adjust), based on a registration area (registration area, RA) of the terminal device, an area in which the time synchronization service is activated. For example, the second indication information may be named as an adjust-based-on-RA indication (adjust based on RA indication).

Optionally, the time synchronization subscription data further includes the first error.

Optionally, the time synchronization subscription data further includes the temporal validity condition.

For example, the time synchronization function network element sends a request message #3 to the data management network element, where the request message #3 includes the identifier of the terminal device, and the request message #3 is used to request the time synchronization subscription data of the terminal device. For example, the time synchronization function network element sends the request message #3 to the data management network element by invoking an Nudm_subscriber data management (subscriber data management, SDM)_Get Req (Nudm_SDM_Get Req) service.

Correspondingly, after receiving the request message #3, the data management network element queries the time synchronization subscription data of the terminal device based on the identifier of the terminal device, and sends a response message #3 to the time synchronization function network element, where the response message #3 includes the time synchronization subscription data of the terminal device. For example, the time synchronization function network element sends the response message #3 to the data management network element by invoking an Nudm_SDM_Get Resp (Nudm_SDM_Get Resp) service.

S303: The time synchronization function network element determines a target access management network element set.

After obtaining the information about the coverage area of the time synchronization service, the time synchronization function network element determines the target access management network element set based on the information about the coverage area of the time synchronization service.

The target access management network element set includes an access management network element that serves a TA in the coverage area of the time synchronization service. It should be understood that, if there are a plurality of access management network elements that serve the TA in the coverage area of the time synchronization service, the target access management network element set includes the plurality of access management network elements. For example, the TA in the coverage area of the time synchronization service includes a TA #1, a TA #2, a TA #3, and a TA #4. The first access management network element serves the TA #1 and the TA #2, and a second access management network element serves the TA #4 and the TA #4. In this case, the target management network element set includes the first access management network element and the second access management network element. If there is one access management network element that serves the TA in the coverage area of the time synchronization service, the target access management network element set includes the one access management network element. For example, the TA in the coverage area of the time synchronization service includes a TA #1 and a TA #2. The first access management network element serves the TA #1 and the TA #2. In this case, the target management network element set includes the first access management network element.

For example, as described above, if the information about the coverage area of the time synchronization service indicates the first TA list, the target access management network element includes an access management network element that serves a TA in the first TA list. In a possible implementation, any TA in the first TA list is served by an access management network element in the target access management network element set. In other words, for any TA #a in the first TA list, the target access management network element set includes an access management network element that serves the TA #a.

For example, a manner in which the time synchronization function network element determines the target access management network element set includes the following steps:
Step 1: The time synchronization function network element sends a request message #4 to a network repository function network element, where the request message #4 includes a TAI of the TA included in the first TA list, and the request message #4 is used to request to serve an access management network element of the TA in the first TA list. For example, the time synchronization function network element sends the request message #4 to the network repository function network element by invoking an Nnrf_network function (network function, NF) Discovery_Request (Nnrf_NFDiscovery_Request) service.
Step 2: The time synchronization function network element receives a response message #4 from the network repository function network element, where the response message #4 includes an identifier of at least one access management network element. For example, the network repository function network element sends the response message #4 to the network repository function network element by invoking an Nnrf_network function (network function, NF) Discovery_Response (Nnrf_NFDiscovery_Response) service. Optionally, the response message #4 further includes a correspondence between the identifier of the at least one access management network element and at least one TAI. A TAI corresponding to an identifier of an access management network element #1 identifies a TA served by the access management network element #1 in the first TA list, and the access management network element #1 is any one of the at least one access management network element.
Step 3: The time synchronization function network element determines that the target access management network element set includes the at least one access management network element. For example, if the response message #4 includes an identifier of the first access management network element and an identifier of the second access management network element, the time synchronization function network element determines that the target access management network element set includes the first access management network element and the second access management network element set. Optionally, if the response message #4 further includes a correspondence between the identifier of the first access management network element and a TAI of the TA #1 and a TAI of the TA #2, and a correspondence between the identifier of the second access management network element and a TAI of the TA #3 and a TAI of the TA #4, the time synchronization function network element determines that the first access management network element serves the TA #1 and the TA #2, and the second access management network element serves the TA #3 and the TA #4.

S304: The time synchronization function network element obtains an identifier of a serving access management network element of the terminal device.

For a manner in which the time synchronization function network element obtains the identifier of the serving access management network element of the terminal device, refer to the foregoing method 200. The following uses an example in which the serving access management network element of the terminal device is the first access management network element for description.

When the time synchronization function network element obtains the identifier of the first access management network element, the time synchronization function network element may determine, based on a relationship between the target access management network element set and the first access management network element, whether to subscribe to the first information. To be specific, S305 in the method 300 may continue to be performed. For descriptions of the first information, refer to S306 below. The relationship between the target access management network element set and the first access management network element includes that the target access management network element set includes the first access management network element, or the target access management network element set does not include the first access management network element.

S305: The time synchronization function network element determines whether the target access management network element set includes the first access management network element.

In a possible implementation, if the time synchronization function network element determines that the target access management network element set does not include the first access management network element, the time synchronization function network element sends a response message #1 to the application function network element, where the response message #1 includes indication information #2, and the indication information #2 indicates that the time synchronization service is not activated. Optionally, the response message #1 further includes a reason why the time synchronization service is not activated. For example, the reason why the time synchronization service is not activated is that the TA served by the access management network element does not overlap the first TA list.

For example, if the time synchronization function network element receives the request message #1 through the network exposure function network element, the time synchronization function network element sends the response message #1 to the application function network element through the network exposure function network element. For example, the time synchronization function network element may send the response message # 1 to the network exposure function network element by invoking a Ntsctsf_ASTI_Creat Response (Nnef_ASTI_Creat Response) service. The network exposure function network element then sends the response message # 1 to the application function network element by invoking a Nnef_ASTI_Creat Response (Ntsctsf_ASTI_Creat Response) service. For another example, the time synchronization function network element may send the response message # 1 to the network exposure function network element by invoking a Ntsctsf_ASTI_Update Response (Nnef_ASTI_Update Response) service. The network exposure function network element then sends the response message # 1 to the application function network element by invoking a Nnef_ASTI_Update Response (Ntsctsf_ASTI_Update Response) service.

For example, if the time synchronization function network element directly receives the request message #1 from the application function network element, the time synchronization function network element directly sends the response message #1 to the application function network element. For example, the application function network element may send the response message #1 to the time synchronization function network element by invoking the Ntsctsf_ASTI_Creat Response service. For another example, the application function network element may send the response message #1 to the time synchronization function network element by invoking the Ntsctsf_ASTI_Update Response service.

In a possible implementation, if the time synchronization function network element determines that the target access management network element set includes the first access management network element, one or more steps in S306 to S314 in the method 300 may continue to be performed.

S306: The time synchronization function network element sends a first subscription request message to the first access management network element.

Correspondingly, the first access management network element receives the first subscription request message from the time synchronization function network element.

The first subscription request message is used to subscribe to the first information, where the first information indicates whether a location of the terminal device is located in a first area, and the first area is a TA served by the first access management network element in the coverage area of the time synchronization service, or the first area is at least one TA served by the first access management network element in the first TA list. Assuming that the first TA list includes a TA #1 to a TA #4, and the TA#1 and the TA #2 are served by the first access management network element, the first area may be the TA #1 and the TA #2. For example, the first area may be referred to as an AoI to which the time synchronization function network element subscribes from the first access management network element.

Optionally, the first subscription request message includes a TAI of a TA corresponding to the first area. As described above, if the response message #4 received by the time synchronization function network element includes the correspondence between the identifier of the at least one access management network element and the at least one TAI, the time synchronization function network element may determine, based on the response message #4, the TA corresponding to the first area. In this way, the first subscription request message sent by the time synchronization function network element may include the TAI of the TA corresponding to the first area. For example, if the TA corresponding to the first area is all TAs served by the first access management network element, the first subscription request message may not include the TAI of the TA corresponding to the first area.

Optionally, the first subscription request message includes TAIs of all the TAs included in the first TA list.

Optionally, the first subscription request message includes the identifier of the terminal device. For example, if the first access management network element serves only the terminal device, or the terminal device includes all terminal devices served by the first access management network element, the first subscription request message may not include the identifier of the terminal device.

Optionally, if a time synchronization type of the terminal device is precision time protocol (precision time protocol, PTP) time synchronization or general precision time protocol (general precision time protocol, gPTP) time synchronization, the first subscription request message further includes first indication information, where the first indication information indicates to adjust the first area to a second area based on the RA of the terminal device, the second area is a first RA, and the first RA is an RA set by the first access management network element for the terminal device. For example, the first indication information may be named as an adjust-AoI-based-on-RA indication (adjust AoI based on RA indication). For example, if the time synchronization type of the terminal device is PTP time synchronization or gPTP time synchronization, the first subscription request message may not include the first indication information.

Optionally, if the time synchronization type of the terminal device is 5G time synchronization (5G Clock synchronization), the first subscription request message further includes the first indication information, where the first indication information indicates to adjust the first area to the second area based on the RA of the terminal device, and the second area is the first RA.

S307: The first access management network element sends a first subscription notification message to the time synchronization function network element.

Correspondingly, the time synchronization function network element receives the first subscription notification message from the first access management network element.

After receiving the first subscription request message, the first access management network element determines the second area based on the first subscription request message, and sends the first subscription notification message to the time synchronization function network element based on the second area and the location of the terminal device. The first subscription notification message notifies whether the location of the terminal device is in the second area. For example, the first subscription notification message includes information #1, and a value of the information #1 is "in (in)" or "out (out)". If the value of the information #1 is "in", the second subscription notification message notifies that the location of the terminal device is in the second area. If the value of the information #1 is "out", the second subscription notification message notifies that the location of the terminal device is outside the second area.

In a possible implementation, if the first subscription request message does not include the TAI of the TA corresponding to the first area and the TAIs of all the TAs included in the first TA list, the first access management network element determines that the second area is all the TAs served by the first access management network element or the first RA.

In a possible implementation, if the first subscription request message includes the TAI of the TA corresponding to the first area, the first access management network element determines that the second area is any one of the following: the first area or the first RA. For example, if the first area is a TA #1 and a TA #2, and the first RA is the TA #2 and a TA #3, the second area is the TA #1 and the TA #2, or the second area is the TA #2 and the TA #3.

For example, if the first subscription request message further includes the first indication information, the second area determined by the first access management network element is the first RA.

In a possible implementation, if the first subscription request message includes the TAIs of all the TAs included in the first TA list, the first access management network element determines that the second area is any one of the following: the TA that is served by the first access management network element and that is in the first TA list or the first RA. For example, if the first TA list includes a TA #1 to a TA #4, the TAs served by the first access management network element are the TA #1, the TA #2, and a TA #5, and the first RAs are the TA #2 and the TA #3, the second area is the TA #1 and the TA #2, or the second area is the TA #2 and the TA #3.

For example, if the first subscription request message further includes the first indication information, the second area determined by the first access management network element is the first RA.

Optionally, if the first subscription notification message notifies that the location of the terminal device is outside the second area, the time synchronization function network element sends the response message #1 to the application function network element.

Optionally, if the first subscription notification message indicates that the location of the terminal device is in the second area, the method 300 further includes S308 to S310.

S308: The time synchronization function network element sends second information to a policy control network element.

Correspondingly, the policy control network element receives the second information from the time synchronization function network element.

The policy control network element is configured to process an AM policy association (AM policy association) for the terminal device.

For example, the second information includes indication information #5, where the indication information #5 indicates to activate the time synchronization service, or the indication information #5 indicates to deactivate the time synchronization service. If the indication information #5 indicates to activate the time synchronization service, it indicates that fourth information is used to determine to activate the time synchronization service. For example, the indication information #5 may be named as a 5G access stratum time distribution indication. If a value of the 5G access stratum time distribution indication is " active (active)", it indicates that the 5G access stratum time distribution indication indicates to activate the time synchronization service. If a value of the 5G access stratum time distribution indication is " deactive (deactive)", it indicates that the 5G access stratum time distribution indication indicates to deactivate the time synchronization service.

Optionally, the second information further includes indication information #3, where the indication information #3 indicates to activate the time synchronization service in a third area, and the third area is a TA in which the first RA overlaps the first area. It may be understood that, when the third information includes the indication information #3, it is equivalent to that the third information indicates to activate the time synchronization service in the third area. In a possible implementation, if the time synchronization subscription data that is of the terminal device and that is obtained by the time synchronization function network element includes the second indication information, the second information may include the indication information #3. In a possible implementation, if the time synchronization type of the terminal device is PTP time synchronization or gPTP time synchronization, the second information may include the indication information #3. In a possible implementation, if the time synchronization type of the terminal device is 5G time synchronization, the second information may also include the indication information #3.

It should be understood that if the second information does not include the indication information #3, the third information indicates to activate the time synchronization service in the second area.

Optionally, the second information further includes indication information #4, where the indication information #4 indicates to activate the time synchronization service in a third area or a second area, and the third area is a TA in which the first RA overlaps the first area. For example, the indication information #4 is 1-bit information. If a value of the indication information #4 is "1", the indication information #4 indicates to activate the time synchronization service in the third area. If a value of the indication information #4 is "0", the indication information #4 indicates to activate the time synchronization service in the second area. It may be understood that, when the indication information #4 indicates to activate the time synchronization service in the third area, it is equivalent to that the third information indicates to activate the time synchronization service in the third area. In a possible implementation, if the time synchronization subscription data that is of the terminal device and that is obtained by the time synchronization function network element includes second indication information, the second information may include the indication information #4, and the indication information #4 indicates to activate the time synchronization service in the third area. In a possible implementation, if the time synchronization type of the terminal device is PTP time synchronization or gPTP time synchronization, the second information may include the indication information #4, and the indication information #4 indicates to activate the time synchronization service in the third area. In a possible implementation, the time synchronization type of the terminal device is 5G time synchronization, the second information may also include the indication information #4, and the indication information #4 indicates to activate the time synchronization service in the third area.

Optionally, the second information further includes the identifier of the terminal device.

Optionally, if the request message #1 or the time synchronization subscription data includes the first error, the second information further includes a second error, where the second error is determined by the time synchronization function network element based on the first error, and the second error is the uplink of the time synchronization error introduced by a Uu air interface. For example, the second error may be referred to as a Uu time synchronization error budget (Uu time synchronization error budget).

Optionally, if the request message #1 or the time synchronization subscription data further includes the temporal validity condition, the second information further includes the temporal validity condition.

For example, the time synchronization function network element sends the second information to the policy control network element by invoking an Npcf_access management (access management, AS) PolicyAuthorization_Creat Rep (Npcf_AMPolicyAuthorization_Creat Rep) service. Alternatively, the time synchronization function network element sends the second information to the policy control network element by invoking an Npcf_access management (access management, AS) PolicyAuthorization_Update Rep (Npcf_AMPolicyAuthorization_Update Rep) service.

Optionally, if the time synchronization function network element does not obtain an identifier of the policy control network element before S308 is performed, the method 300 further includes: The time synchronization function network element sends a request message #5 to a binding support function (binding support function, BSF) network element, where the request message #5 includes the identifier of the terminal device, and the request message #5 is used to request the policy control network element that processes the AM policy association for the terminal device. The time synchronization function network element receives a response message #5 from the binding support function network element, where the response message #5 includes the identifier of the policy control network element. For example, the identifier of the policy control network element includes one or more of the following: an ID of the policy control network element, or an address of the policy control network element, for example, an IP address.

For example, the time synchronization function network element sends the request message # 5 to the binding support function network element by invoking an Nbsf_Management_Subscribe (Nbsf_Management_Subscribe) service. Correspondingly, the binding support function network element sends the response message #5 to the time synchronization function network element by invoking an Nbsf_Management_Notify (Nbsf_Management_Notify) service.

S309: The policy control network element sends fourth information to the first access management network element.

Correspondingly, the first access management network element receives the fourth information from the policy control network element.

After receiving the second information, the policy control network element sends the fourth information to the first access management network element based on the second information.

For example, the fourth information includes the indication information #5, and the indication information #5 indicates to activate the time synchronization service. For more descriptions of the indication information #5, refer to S308.

Optionally, if the second information includes the indication information #3, the fourth information further includes the indication information #3, and the fourth information indicates to activate the time synchronization service in the third area, or the fourth information is used to determine to activate the time synchronization service in the third area.

It should be understood that if the fourth information does not include the indication information #3, the fourth information indicates to activate the time synchronization service in the second area.

Optionally, if the second information includes the indication information #4, the fourth information further includes the indication information #4. If the indication information #4 indicates to activate the time synchronization service in the third area, it is equivalent to that the fourth information indicates to activate the time synchronization service in the third area, or the fourth information is used to determine to activate the time synchronization service in the third area.

Optionally, if the second information includes the identifier of the terminal device, the fourth information further includes the identifier of the terminal device.

Optionally, if the second information further includes the second error, the fourth information further includes the second error.

Optionally, if the second information further includes the temporal validity condition, the fourth information further includes the temporal validity condition.

For example, the policy control network element sends the fourth information to the first access management network element by initiating an AM policy association modification procedure (AM policy association modification procedure).

S310: The first access management network element sends N2 information to an access network device.

Correspondingly, the access network device receives the N2 information from the first access management network element.

After receiving the fourth information, the first access management network element stores the fourth information in a context of the terminal device, and sends the N2 information to the access network device based on the fourth information.

In a possible implementation, if the fourth information includes the indication information #3, the first access management network element sends the N2 information to the access network device in the TA corresponding to the third area, to activate the time synchronization service in the third area by using the access network device in the TA corresponding to the third area.

In a possible implementation, if the fourth information does not include the indication information #3, the first access management network element sends the N2 information to the access network device in the TA corresponding to the second area, to activate the time synchronization service in the second area by using the access network device in the TA corresponding to the second area.

In a possible implementation, if the fourth information includes the indication information #4, and the indication information #4 indicates to activate the time synchronization service in the third area, the first access management network element sends the N2 information to the access network device in the TA corresponding to the third area, to activate the time synchronization service in the third area by using the access network device in the TA corresponding to the third area.

In a possible implementation, if the fourth information includes the indication information #4, and the indication information #4 indicates to activate the time synchronization service in the second area, the first access management network element sends the N2 information to the access network device in the TA corresponding to the second area, to activate the time synchronization service in the third area by using the access network device in the TA corresponding to the second area.

For example, the N2 information includes indication information #6, and the indication information #6 indicates to enable the time synchronization service, or the indication information #6 indicates to start the time synchronization service. For example, the indication information #6 may be named as a 5G access stratum time distribution indication. If a value of the 5G access stratum time distribution indication is "enable (enable)", it indicates that the 5G access stratum time distribution indication indicates to enable or start the time synchronization service.

Optionally, if the fourth information includes the identifier of the terminal device, the N2 information further includes the identifier of the terminal device.

Optionally, if the fourth information further includes the second error, the N2 information further includes the second error.

Optionally, if the fourth information further includes the temporal validity condition, the N2 information further includes the temporal validity condition.

After the access network device receives the N2 information, if the indication information #6 included in the N2 information indicates to enable the time synchronization service, the access network device starts the time synchronization service. Optionally, if the N2 information includes the identifier of the terminal device, after starting the time synchronization service, the access network device provides reference time information for the terminal device. Optionally, if the N2 information includes the second error, the access network device provides the reference time information for the terminal device based on the second error. Optionally, if the N2 information includes the temporal validity condition, the access network device starts the time synchronization service in a time period indicated by the temporal validity condition.

Optionally, if the serving access management network element of the terminal device is switched from the first access management network element to the second access management network element due to movement of the terminal device, the method 300 further includes S311 to S315.

S311: The first access management network element sends the context of the terminal device to the second access management network element.

Correspondingly, the second access management network element receives the context of the terminal device from the first access management network element.

When the serving access management network element of the terminal device is switched from the first access management network element to the second access management network element, the first access management network element or the second access management network element initiates a transmission process of the context of the terminal device, so that the first access management network element sends the context of the terminal device to the second access management network element. The context of the terminal device includes event subscription (event subscription) of the terminal device. The event subscription is used to determine that the time synchronization function network element subscribes to the first information from the first access management network element, and is used to determine the second area determined by the first access management network element.

For example, the first access management network element sends the context of the terminal device to the second access management network element by invoking an Namf_Communication_UEContextTransfer (Namf_Communication_UEContextTransfer) service.

S312a: The second access management network element sends a second subscription notification message to the time synchronization function network element.

Correspondingly, the time synchronization function network element receives the second subscription notification message from the second access management network element.

As described above, the context of the terminal device includes the event subscription of the terminal device. Therefore, the second access management network element may determine, based on the context of the terminal device, that the time synchronization function network element subscribes to the first information, and determine the second area. Further, the second access management network element may send the second subscription notification message to the time synchronization function network element based on the second area and the location of the terminal device, where the second subscription notification message notifies whether the location of the terminal device is in the second area. For more descriptions of the second subscription notification message, refer to the descriptions of the first subscription notification message in S306.

The second subscription notification message may further include the identifier of the second access management network element.

Optionally, the method 300 further includes S312b.

S312b: The data management network element sends a notification message to the time synchronization function network element.

Correspondingly, the time synchronization function network element receives the notification message from the data management network element.

When the serving access management network element of the terminal device is switched from the first access management network element to the second access management network element, the data management network element sends the notification message to the time synchronization function network element, where the notification message includes the identifier of the second access management network element.

It may be understood that if the time synchronization function network element receives the second subscription notification message from the second access management network element, and/or receives the notification message from the data management network element, the time synchronization function network element may determine whether the serving access management network element of the terminal device changes. If the time synchronization function network element determines that the serving access management network element of the terminal device is changed to the second access management network element, S313 in the method 300 continues to be performed.

S313: The time synchronization function network element determines whether the target access management network element set includes the second access management network element.

S314: The time synchronization function network element sends a second subscription request message or a subscription cancellation request message to the second access management network element.

Correspondingly, the second access management network element receives the second subscription request message or the subscription cancellation request message from the time synchronization function network element.

In a possible implementation, if the time synchronization function network element determines that the target access management network element set includes the second access management network element, the time synchronization function network element sends the second subscription request message to the second access management network element.

The second subscription request message is used to subscribe to the third information, where the third information indicates whether the location of the terminal device is located in a fourth area, the fourth area is a TA served by the second access management network element in the coverage area of the time synchronization service, or the fourth area is at least one TA served by the second access management network element in the first TA list. Assuming that the first TA list includes a TA #1 to a TA #4, and the TA #3 and the TA #4 are served by the second access management network element, the fourth area may be the TA #3 and the TA #4. For example, the fourth area may be referred to as an AoI to which the time synchronization function network element subscribes from the second access management network element.

Optionally, the second subscription request message includes a TAI of a TA corresponding to the fourth area. As described above, if the response message #4 received by the time synchronization function network element includes the correspondence between the identifier of the at least one access management network element and the at least one TAI, the time synchronization function network element may determine, based on the response message #4, the TA corresponding to the fourth area. In this way, the second subscription request message sent by the time synchronization function network element may include the TAI of the TA corresponding to the fourth area. For example, if the TA corresponding to the fourth area is all TAs served by the second access management network element, the second subscription request message may not include the TAI of the TA corresponding to the fourth area.

Optionally, the second subscription request message includes TAIs of all the TAs included in the first TA list.

Optionally, the second subscription request message includes the identifier of the terminal device. For example, if the second access management network element serves only the terminal device, or the terminal device includes all terminal devices served by the second access management network element, the second subscription request message may not include the identifier of the terminal device.

Optionally, if the time synchronization type of the terminal device is PTP time synchronization or gPTP time synchronization, the second subscription request message further includes indication information #7, where the indication information #7 indicates to adjust the fourth area to a fifth area based on the RA of the terminal device, the fifth area is a second RA, and the second RA is an RA set by the second access management network element for the terminal device. For example, the indication information #7 may be named as an adjust-AoI-based-on-RA indication. For example, if the time synchronization type of the terminal device is PTP time synchronization or gPTP time synchronization, the second subscription request message may not include the indication information #7.

Optionally, if the time synchronization type of the terminal device is 5G time synchronization (the 5G Clock synchronization), the second subscription request message further includes the indication information #7, where the indication information #7 indicates to adjust the fourth area to the fifth area based on the RA of the terminal device, and the fifth area is the second RA.

After receiving the second subscription request message, the second access management network element may send a third subscription notification message to the time synchronization function network element, where the third subscription notification message notifies whether the location of the terminal device is in the fifth area. For a manner in which the second access management network element sends the third subscription notification message to the time synchronization function network element, refer to the manner in which the first access management network element sends the first subscription notification message to the time synchronization function network element in S307.

After receiving the third subscription notification message, the time synchronization function network element may deploy the time synchronization service for the terminal device based on the third subscription notification message. For a manner in which the time synchronization function network element deploys the time synchronization service for the terminal device, refer to the foregoing descriptions of S308 to S310.

In a possible implementation, if the time synchronization function network element determines that the target access management network element set does not include the second access management network element, the time synchronization function network element sends the subscription cancellation request message to the second access management network element, where the subscription cancellation request message is used to cancel subscription to the first information.

In this embodiment of this application, the time synchronization function network element may request the data management network element to discover the serving access management network element of the terminal device. When the application function network element requests the time synchronization function network element to activate the time synchronization service for the terminal device based on the coverage area of the time synchronization service, if the target access management network element set (The target access network element set includes the access management network element of the TA serving the coverage area of the time synchronization service.) include the serving access management network element of the terminal device, the time synchronization function network element subscribes to, from the serving access management network element of the terminal device, whether the location of the terminal device is in the AoI of the time synchronization service, to prevent the time synchronization function network element from initiating subscription to the non-serving access management network element of the terminal device, save signaling, and activate the time synchronization service based on the coverage area of the time synchronization service.

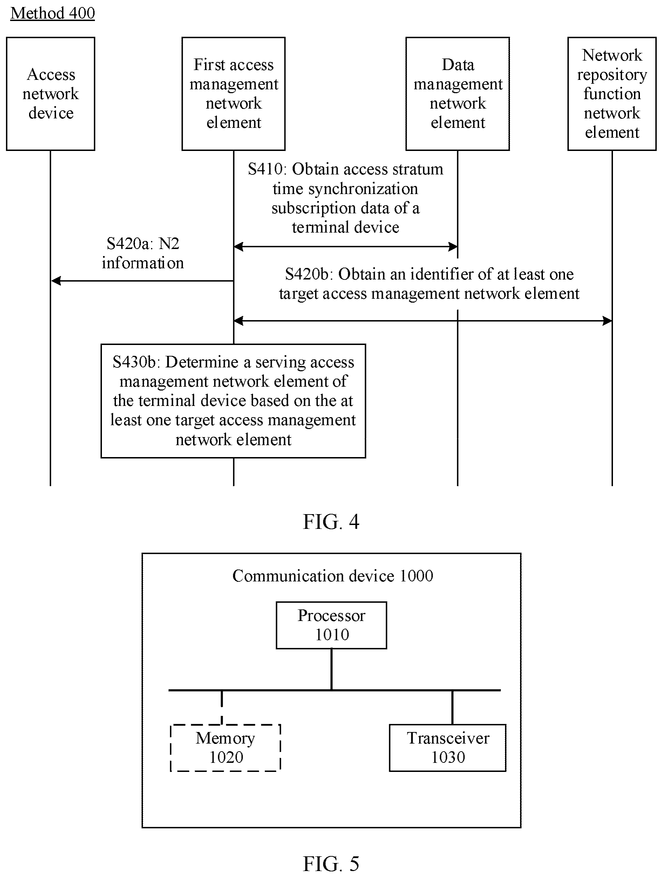

With reference to FIG. 3A and FIG. 3B, the foregoing describes a manner in which the time synchronization function network element deploys the time synchronization service for the terminal device based on the location of the terminal device. With reference to FIG. 4, the following describes a manner in which an access management network element deploys a time synchronization service for a terminal device based on a location of the terminal device.

FIG. 4 is a schematic flowchart of a communication method 400 according to an embodiment of this application. As shown in FIG. 4, the method 400 may include the following steps.

S410: A first access management network element obtains access and mobility subscription data (access and mobility subscription data) of a terminal device.

The access and mobility subscription data includes information about a coverage area of a time synchronization service to which the terminal device subscribes, and the information about the coverage area of the time synchronization service indicates the coverage area of the time synchronization service to which the terminal device subscribes. For example, the information about the coverage area of the time synchronization service may include one or more of the following: coordinate information, a geographical area identifier, address information, a TAI, and a cell ID. For example, the time synchronization service to which the terminal device subscribes is an access stratum time synchronization service.

The coverage area of the time synchronization service indicates a first TA list. In other words, the first TA list may be determined based on the information about the coverage area of the time synchronization service. For a manner of determining the first TA list based on the information about the coverage area of the time synchronization service, refer to the descriptions in S301 in the foregoing method 300.

Optionally, the access and mobility subscription data further includes a third error, and the third error is an uplink of a time synchronization error introduced by a Uu air interface. For example, the third error may be referred to as a Uu time synchronization error budget (Uu time synchronization error budget).

Optionally, the access and mobility subscription data further includes start time information and/or end time information, the start time information indicates a moment at which the time synchronization service is activated, and the end time information indicates a moment at which the time synchronization service is deactivated.

Optionally, the access and mobility subscription data further includes third indication information, and the third indication information indicates to adjust, based on a RA of the terminal device, an area in which the time synchronization service is activated. For example, the third indication information may be named as an adjust-based-on-RA indication (adjust based on RA indication).

In a possible implementation, after the first access management network element receives a registration request (registration request) of the terminal device, the first access management network element obtains the access and mobility subscription data of the terminal device from a data management network element.

For example, a manner in which the first access management network element obtains the access and mobility subscription data of the terminal device from the data management network element includes the following steps.

Step 1: The first access management network element sends a request message #6 to the data management network element, where the request message #6 includes an identifier of the terminal device, and the request message #6 is used to request the access and mobility subscription data of the terminal device. For example, the first access management network element sends the request message #6 to the data management network element by invoking an Nudm_SDM_Get Req service.

Step 2: After receiving the request message #6, the data management network element queries the access and mobility subscription data of the terminal device based on the identifier of the terminal device, and sends a response message #6 to the first access management network element, where the response message #6 includes the access and mobility subscription data of the terminal device. For example, the data management network element sends the response message #6 to the first access management network element by invoking an Nudm_SDM_Get Resp service.

It may be understood that, when the access and mobility subscription data includes the information about the coverage area of the time synchronization service to which the terminal device subscribes, the first access management network element may determine, based on the information about the coverage area of the time synchronization service, the area in which the time synchronization service is activated for the terminal device. In other words, the access and mobility subscription data may be used to determine the area in which the time synchronization service is activated for the terminal device.

The following describes a manner in which the first access management network element determines the area in which the time synchronization service is activated for the terminal device.

In a possible implementation, if there is a TA in which a first area overlaps a first RA, the first access management network element determines to activate the time synchronization service in the TA in which the first area overlaps the first RA. The first area is a TA served by the first access management network element in the coverage area of the time synchronization service, and the first RA is an RA set by the first access management network element for the terminal device. The TA in which the first area overlaps the first RA may also be referred to as a third area. In this implementation, the access and mobility subscription data is used to determine to activate the time synchronization service in the third area.

In a possible implementation, if there is a TA in which the first area overlaps the first RA, the first access management network element determines to activate the time synchronization service in the first RA.

Optionally, if the access and mobility subscription data includes the third indication information, the first access management network element determines to activate the time synchronization service in the first RA or activate the time synchronization service in the third area. If the access and mobility subscription data does not include the third indication information, the first access management network element determines to activate the time synchronization service in the first area or the first RA.

In a possible implementation, the first access management network element sets the first RA for the terminal device based on the coverage area of the time synchronization service, and then the first access management network element determines to activate the time synchronization service in the first RA.

For example, the first RA set by the first access management network element for the terminal device based on the coverage area of the time synchronization service is the coverage area of the time synchronization service. For example, if a TA list served by the first access management network element includes all TAs in the coverage area of the time synchronization service, the first access management network element may set the first RA as the coverage area of the time synchronization service.

For example, the first RA set by the first access management network element for the terminal device based on the coverage area of the time synchronization service is at least one TA in the coverage area of the time synchronization service. For example, the first access management network element sets, as the first RA, a TA that is in the coverage area of the time synchronization service and that is served by the first access management network element. In this case, the TA in the first RA is in both the TA list in the coverage area of the time synchronization service and the TA list served by the first access management network element.

After the first access management network element determines the area in which the time synchronization service is activated for the terminal device, the first access management network element may activate the time synchronization service for the terminal device. In other words, S420a in the method 400 continues to be performed.

S420a: The first access management network element sends N2 information to an access network device.

Correspondingly, the access network device receives the N2 information from the first access management network element.

It should be understood that, in S420a, the first access management network element sends the N2 information to an access network device in a TA corresponding to a sixth area, to activate the time synchronization service in the sixth area by using the access network device in the TA corresponding to the sixth area. The sixth area is an area that is determined by the first access management network element and in which the time synchronization service is activated for the terminal device.

For example, the N2 information includes indication information #6, and the indication information #6 indicates to enable the time synchronization service, or the indication information #6 indicates to start the time synchronization service. For example, the indication information #6 may be named as a 5G access stratum time distribution indication. If a value of the 5G access stratum time distribution indication is "enable (enable)", it indicates that the 5G access stratum time distribution indication indicates to enable or start the time synchronization service.

Optionally, the N2 information further includes the identifier of the terminal device.

Optionally, if the access and mobility subscription data further includes the third error, the N2 information further includes the third error.

Optionally, if the access and mobility subscription data further includes the start time information and/or the end time information, the N2 information further includes the start time information and/or the end time information.

After the access network device receives the N2 information, if the indication information #6 included in the N2 information indicates to enable the time synchronization service, the access network device starts the time synchronization service. Optionally, if the N2 information includes the identifier of the terminal device, after starting the time synchronization service, the access network device performs the access stratum time synchronization service for the terminal device, that is, provides reference time information for the terminal device. Optionally, if the N2 information includes the third error, the access network device performs the access stratum time synchronization service for the terminal device based on the third error. Optionally, if the N2 information includes the start time information and/or the end time information, the access network device starts the time synchronization service at a moment indicated by the start time information, and/or disables the time synchronization service at a moment indicated by the end time information.

Optionally, if there is no overlapping TA between the TA served by the first access management network element and the TA in the coverage area of the time synchronization service, the first access management network element cannot activate the time synchronization service for the terminal device, and the first access management network element may reselect an access management network that provides a service for the terminal device. In other words, S420b and S430b in the method 400 may be performed.

S420b: The first access management network element obtains an identifier of at least one target access management network element.

The target access management network element serves at least one TA in the coverage area of the time synchronization service. In other words, the target access management network element serves at least one TA in the first TA list.

For example, a manner in which the first access management network element obtains the identifier of the at least one target access management network element may include the following steps.

Step 1: The first access management network element sends a second request message to a network repository function network element, where the second request message includes the information about the coverage area of the time synchronization service, and the second request message is used to request an access management network element that serves a TA in the coverage area of the time synchronization service. Optionally, the second request message further includes an identifier of the first access management network element. For the identifier of the first access management network element, refer to the descriptions in S220 in the foregoing method 200. For example, the first access management network element sends the second request message to the network repository function network element by invoking an Nnrf_NFDiscovery_Request service.

Step 2: The first access management network element receives a second request response message from the network repository function network element, where the second request response message includes the identifier of the at least one target access management network element. For example, the network repository function network element sends the second request response message to the network repository function network element by invoking an Nnrf_NFDiscovery_Response service.

S430b: The first access management network element determines a serving access management network element of the terminal device based on the at least one target access management network element.

After receiving the identifier of the at least one target access management network element, the first access management network element may select the serving access management network element of the terminal device from the at least one target access management network element. For example, the first access management network element determines any access management network element in the at least one target access management network element as the serving access management network element of the terminal device, or the first access management network element determines an access management network element with lowest load in the at least one target access management network element as the serving access management network element of the terminal device.

After determining the serving access management network element of the terminal device, the first access management network element may forward the registration request of the terminal device to the access management network element determined by the first access management network element.

It may be understood that, because the target access management network element serves the at least one TA in the coverage area of the time synchronization service, the serving access management network element that is of the terminal device and that is determined by the first access management network element based on the at least one target access management network element may support activating the time synchronization service for the terminal device.

In this embodiment of this application, the first access management network element activates the time synchronization service in the first RA, to avoid activating the time synchronization service outside the area in which the terminal device is located, so as to save air interface resources. Alternatively, the first access management network element activates the time synchronization service in the TA in which the first RA overlaps the first area, to avoid activating the time synchronization service outside the area in which the terminal device is located, and avoid activating the time synchronization service outside the coverage area of the time synchronization service, so as to save air interface resources.

In addition, if the TA served by the first access management network element does not overlap the TA in the time synchronization service range, the first access management network element may reselect a serving access management network element for the terminal device based on the coverage area of the time synchronization service, and the serving access management network element reselected by the first access management network element for the terminal device serves the at least one TA in the coverage area of the time synchronization service, so that the serving access management network element reselected by the first access management network element for the terminal device can activate the time synchronization service for the terminal device.

It should be understood that sequence numbers of the foregoing processes do not mean a sequence of performing the processes. The sequence of performing the processes should be determined according to functions and internal logic of the processes, and should not be construed as any limitation on the implementation processes of the embodiments of this application.

It should be further understood that, in embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It may be understood that, in the foregoing embodiments of this application, a method implemented by a communication device may be alternatively implemented by a component (for example, a chip or a circuit) that can be disposed inside the communication device.

The communication methods provided in embodiments of this application are described above in detail with reference to FIG. 2 to FIG. 4. The foregoing communication methods are mainly described from a perspective of interaction between network elements. It may be understood that to implement the foregoing functions, each network element includes a corresponding hardware structure and/or software module for performing each function. A person skilled in the art should be able to be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

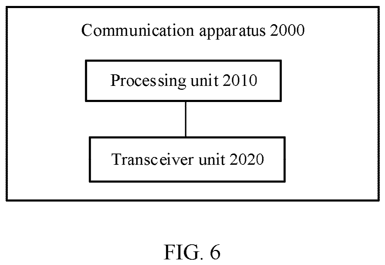

The communication apparatuses provided in embodiments of this application are described in detail with reference to FIG. 5 and FIG. 6. It should be understood that descriptions of apparatus embodiments correspond to the descriptions of the method embodiments. Therefore, for content that is not described in detail, refer to the foregoing method embodiments. For brevity, some content is not described again.

In embodiments of this application, functional modules of a transmitter device or a receiver device may be obtained through division based on the foregoing method examples. For example, each functional module may be obtained through division based on each function, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used. An example in which each functional module is obtained through division based on each corresponding function is used below for description.

FIG. 5 is a block diagram of a communication device 1000 according to this application. Any network element in any one of the method 200 to the method 400, for example, the time synchronization function network element or the access management network element, may be implemented by the communication device shown in FIG. 5.

It should be understood that the communication device 1000 may be a physical device, a component (for example, an integrated circuit or a chip) of a physical device, or a functional module in a physical device.

As shown in FIG. 5, the wireless communication device 1000 includes one or more processors 1010. The processor 1010 may store execution instructions for performing the method in embodiments of this application. Optionally, the processor 1010 may invoke an interface to implement a receiving function and a sending function. The interface may be a logical interface or a physical interface. This is not limited. For example, the interface may be a transceiver circuit or an interface circuit. The transceiver circuit or the interface circuit configured to implement the receiving and sending functions may be separated or may be integrated together. The transceiver circuit or the interface circuit may be configured to read and write code/data, or the transceiver circuit or the interface circuit may be configured to transmit or transfer a signal.

Optionally, the interface may be implemented as a transceiver. Optionally, the communication device 1000 may further include a transceiver 1030. The transceiver 1030 may be referred to as a transceiver unit, a transceiver machine, a transceiver circuit, or a transceiver, and is configured to implement receiving and sending functions.

Optionally, the communication device 1000 may further include a memory 1020. A specific deployment position of the memory 1020 is not specifically limited in embodiments of this application. The memory may be integrated into the processor, or may be independent of the processor. When the communication device 1000 does not include a memory, the communication device 1000 only needs to have a processing function, and the memory may be deployed at another location (for example, a cloud system).

The processor 1010, the memory 1020, and the transceiver 1030 communicate with each other through an internal connection path, to transfer a control signal and/or a data signal.

It may be understood that, although not shown, the communication device 1000 may further include another apparatus, for example, an input apparatus, an output apparatus, or a battery.

Optionally, in some embodiments, the memory 1020 may store execution instructions used to perform the method in embodiments of this application. The processor 1010 may execute the instructions stored in the memory 1020 and complete, in combination with other hardware (for example, the transceiver 1030), the steps performed in the following methods. For a specific working process and beneficial effect, refer to the descriptions in the foregoing method embodiments.

The methods disclosed in embodiments of this application may be applied to the processor 1010, or may be implemented by the processor 1010. The processor 1010 may be an integrated circuit chip and has a signal processing capability. In an implementation process, steps of the methods may be completed by using an integrated logic circuit of hardware in the processor or by using instructions in a form of software. The foregoing processor may be a general purpose processor, a digital signal processor (digital signal processor, DSP), an application-specific integrated circuit (application specific integrated circuit, ASIC), a field programmable gate array (field programmable gate array, FPGA) or another programmable logic device, a discrete gate or transistor logic device, or a discrete hardware component. The processor may implement or execute the methods, steps, and logical block diagrams disclosed in embodiments of this application. The general-purpose processor may be a microprocessor, or the processor may be any conventional processor or the like. Steps of the methods disclosed with reference to embodiments of this application may be directly executed and accomplished by using a hardware decoding processor, or may be executed and accomplished by using a combination of hardware and software modules in the decoding processor. The software module may be located in a mature storage medium in the art, such as a random access memory (random access memory, RAM), a flash memory, a read-only memory (read-only memory, ROM), a programmable read-only memory, an electrically erasable programmable memory, or a register. The storage medium is located in the memory, and the processor reads instructions in the memory and completes the steps in the foregoing methods in combination with hardware of the processor.

It may be understood that the memory 1020 may be a volatile memory or a non-volatile memory, or may include both a volatile memory and a non-volatile memory. The non-volatile memory may be a read-only memory ROM, a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory RAM, and may serve as an external cache. By way of example but not limitative descriptions, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus dynamic random access memory (direct rambus RAM, DR RAM). It should be noted that, the memory of the systems and methods described in this specification includes but is not limited to these and any other memories of appropriate types.

FIG. 6 is a block diagram of a communication apparatus 2000 according to this application.

Optionally, a specific form of the communication apparatus 2000 may be a general-purpose computer device or a chip in the general-purpose computer device. This is not limited in this embodiment of this application. As shown in FIG. 6, the communication apparatus includes a processing unit 2010 and a transceiver unit 2020.

Specifically, the communication apparatus 2000 may be any network element in this application, and may implement functions that can be implemented by the network element. It should be understood that the communication apparatus 2000 may be a physical device, a component (for example, an integrated circuit or a chip) of a physical device, or a functional module in a physical device.

In a possible design, the communication apparatus 2000 may be the time synchronization function network element in the foregoing method embodiments, or may be a chip configured to implement a function of the time synchronization function network element in the foregoing method embodiments.

For example, the transceiver unit 2020 is configured to obtain an identifier of a first access management network element, where the first access management network element is a serving access management network element of a terminal device. The processing unit 2010 is configured to determine whether a target access management network element set includes the first access management network element, where the target access management network element set includes an access management network element that serves a TA in a time synchronization service range.

Optionally, if the target access management network element set includes the first access management network element, the transceiver unit 2020 is further configured to send a first subscription request message to the first access management network element, where the first subscription request message is used to subscribe to first information, the first information indicates whether the location of the terminal device is in a first area, and the first area is a TA served by the first access management network element in the time synchronization service range; or if the target access management network element set does not include the first access management network element, the processing unit 2010 is further configured to determine not to subscribe to the first information from the first access management network element.

Optionally, the transceiver unit 2020 is further configured to receive a first subscription notification message from the first access management network element, where the first subscription notification message notifies whether the location of the terminal device is in a second area, the second area is the first area or a first RA, and the first RA is an RA set by the first access management network element for the terminal device. When the first subscription notification message notifies that the location of the terminal device is in the second area, the transceiver unit 2020 is further configured to send second information to a policy control network element, where the second information indicates to activate the time synchronization service in a third area, and the third area is a TA in which the first RA overlaps the first area.

Optionally, the transceiver unit 2020 is further configured to receive a second subscription notification message from a second access management network element, where the second subscription notification message notifies whether the location of the terminal device is located in the second area, the second area is the first area or the first RA, the first RA is an RA set by the first access management network element for the terminal device, and the second access management network element is a serving access management network element of the terminal device. The processing unit 2010 is further configured to determine whether the target access management network element set includes the second access management network element.

Optionally, if the target access management network element set includes the second access management network element, the transceiver unit 2020 is further configured to send a second subscription request message to the second access management network element, where the second subscription request message is used to subscribe to third information, the third information indicates whether the location of the terminal device is in a fourth area, and the fourth area is a TA served by the second access management network element in the coverage area of the time synchronization service; or if the target access management network element set does not include the second access management network element, the transceiver unit 2020 is further configured to send a subscription cancellation request message to the second access management network element, where the subscription cancellation request message is used to cancel subscription to the first information.

Optionally, the transceiver unit 2020 is further configured to receive time synchronization subscription data from a data management network element, where the time synchronization subscription data includes information about the coverage area of the time synchronization service and second indication information, and the second indication information indicates to adjust, based on an RA of the terminal device, an area in which the time synchronization service is activated.

It should be understood that when the communication apparatus 2000 is the time synchronization function network element, the transceiver unit 2020 in the communication apparatus 2000 may be implemented by using a communication interface (for example, a transceiver or an input/output interface), and the processing unit 2010 in the communication apparatus 2000 may be implemented by using at least one processor, for example, may correspond to the processor 1010 shown in FIG. 5.

Optionally, the communication apparatus 2000 may further include a storage unit. The storage unit may be configured to store instructions or data. The processing unit may invoke the instructions or the data stored in the storage unit, to implement a corresponding operation.

It should be further understood that a specific process in which the units perform the foregoing corresponding steps is described in detail in the foregoing method embodiments. For brevity, details are not described herein again.

In another possible design, the communication apparatus 2000 may be the first access management network element in the foregoing method embodiments, or may be a chip configured to implement a function of the first access management network element in the foregoing method embodiments.

For example, the transceiver unit 2020 is configured to obtain fourth information, where the fourth information is used to determine to activate a time synchronization service in a third area, the third area is a TA in which a first RA overlaps a first area, the first RA is an RA set by the communication apparatus for the terminal device, and the first area is a TA served by the first access management network element in the coverage area of the time synchronization service. The processing unit 2010 is configured to determine the third area based on the first RA and the first area. The processing unit 2010 is further configured to activate the time synchronization service in the third area.

Optionally, the transceiver unit 2020 is specifically configured to receive the fourth information from a policy control network element.

Optionally, the fourth information is access and mobility subscription data of the terminal device, and the transceiver unit 2020 is specifically configured to receive the access and mobility subscription data from a data management network element, where the access and mobility subscription data includes information about the coverage area of the time synchronization service.

It should be understood that when the communication apparatus 2000 is the first access management network element, the transceiver unit 2020 in the communication apparatus 2000 may be implemented by using a communication interface (for example, a transceiver or an input/output interface), for example, may correspond to the communication interface 1030 shown in FIG. 5, and the processing unit 2010 in the communication apparatus 2000 may be implemented by using at least one processor, for example, may correspond to the processor 1010 shown in FIG. 5.

Optionally, the communication apparatus 2000 may further include a storage unit. The storage unit may be configured to store instructions or data. The processing unit may invoke the instructions or the data stored in the storage unit, to implement a corresponding operation.

It should be further understood that a specific process in which the units perform the foregoing corresponding steps is described in detail in the foregoing method embodiments. For brevity, details are not described herein again.

In addition, in this application, the communication apparatus 2000 is presented in a form of a functional module. The "module" herein may be an application-specific integrated circuit ASIC, a circuit, a processor that executes one or more software or firmware programs and a memory, an integrated logic circuit, and/or another component that can provide the foregoing functions. In a simple embodiment, a person skilled in the art may figure out that the apparatus 2000 may be in a form shown in FIG. 6. The processing unit 2010 may be implemented by using the processor 1010 shown in FIG. 5. Optionally, if the computer device shown in FIG. 5 includes the memory 1020, the processing unit 2010 may be implemented by using the processor 1010 and the memory 1020. The transceiver unit 2020 may be implemented by using the transceiver 1030 shown in FIG. 5. The transceiver 1030 includes a receiving function and a sending function. Specifically, the processor is implemented by executing a computer program stored in the memory. Optionally, when the apparatus 2000 is a chip, a function and/or an implementation process of the transceiver unit 2020 may alternatively be implemented as a pin, a circuit, or the like. Optionally, the memory may be a storage unit on the chip, such as a register or a cache. The storage unit may be a storage unit that is in the computer device and that is located outside the chip, for example, the memory 1020 shown in FIG. 5, or may be a storage unit that is deployed in another system or device but not located in the computer device. A person of ordinary skill in the art may be aware that, in combination with units and algorithm steps of the examples described in embodiments disclosed in this specification, this application can be implemented by electronic hardware or a combination of computer software and electronic hardware. Whether the functions are performed by hardware or software depends on particular applications and design constraints of the technical solution. A person skilled in the art may use different methods to implement the described functions for each particular application, but it should not be considered that the implementation goes beyond the scope of this application.

Aspects or features of this application may be implemented as a method, an apparatus, or a product that uses standard programming and/or engineering technologies. The term "product" used in this application covers a computer program that can be accessed from any computer-readable component, carrier, or medium. For example, the computer-readable medium may include but is not limited to a magnetic storage device (for example, a hard disk, a floppy disk, or a magnetic tape), an optical disc (for example, a compact disc (compact disc, CD) or a digital versatile disc (digital versatile disc, DVD)), or a smart card and a flash memory device (for example, an erasable programmable read-only memory (erasable programmable read-only memory, EPROM), a card, a stick, or a key drive). In addition, various storage media described in this specification may represent one or more devices and/or other machine-readable media that are configured to store information. The term "machine-readable medium" may include but is not limited to a wireless channel, and various other media that can store, contain, and/or carry instructions and/or data.

According to the method provided in embodiments of this application, this application further provides a computer program product, where the computer program product includes: computer program code. When the computer program code runs on a computer, the computer is enabled to perform the method in any one of the embodiments shown in FIG. 2 to FIG. 4.

According to the method provided in embodiments of this application, this application further provides a computer-readable medium. The computer-readable medium stores program code. When the program code is run on a computer, the computer is enabled to perform the method in any one of the embodiments shown in FIG. 2 to FIG. 4.

According to the methods provided in embodiments of this application, this application further provides a system. The system includes the foregoing apparatus or device.

All or some of the foregoing embodiments may be implemented through software, hardware, firmware, or any combination thereof. When software is used to implement the foregoing embodiments, all or some of the foregoing embodiments may be implemented in a form of a computer program product. The computer program product includes one or more computer instructions. When the computer instructions are loaded and executed on the computer, all or some of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a high-density digital video disc (digital video disc, DVD)), a semiconductor medium (for example, a solid-state drive (solid-state disc, SSD)), or the like.

Terms such as "component", "module", and "system" used in this specification indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on the computing device may be components. One or more components may reside within a process and/or a thread of execution, and a component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network such as the Internet interacting with other systems by using the signal).

A person of ordinary skill in the art may be aware that, in combination with units and algorithm steps of the examples described in embodiments disclosed in this specification, this application can be implemented by electronic hardware or a combination of computer software and electronic hardware. Whether the functions are performed by hardware or software depends on particular applications and design constraints of the technical solution. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electrical form, in a mechanical form, or in another form.

The units described as separate components may or may not be physically separate, and parts displayed as units may or may not be physical units, may be located in one place, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

When the functions are implemented in a form of a software function unit and sold or used as an independent product, the functions may be stored in a computer readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
obtaining, by a time synchronization function network element, an identifier of a first access management network element, wherein the first access management network element is a serving access management network element of a terminal device; and
determining, by the time synchronization function network element, whether a target access management network element set comprises the first access management network element, wherein the target access management network element set comprises an access management network element that serves a tracking area TA in a coverage area of a time synchronization service.

2. The method according to claim 1, wherein the method further comprises:
if the target access management network element set comprises the first access management network element, sending, by the time synchronization function network element, a first subscription request message to the first access management network element, wherein the first subscription request message is used to subscribe to first information, the first information indicates whether a location of the terminal device is in a first area, and the first area is a TA served by the first access management network element in the coverage area of the time synchronization service; or
if the target access management network element set does not comprise the first access management network element, skipping subscribing to, by the time synchronization function network element, the first information from the first access management network element.

3. The method according to claim 2, wherein after sending, by the time synchronization function network element, the first subscription request message to the first access management network element, the method further comprises:
receiving, by the time synchronization function network element, a first subscription notification message from the first access management network element, wherein the first subscription notification message notifies whether the location of the terminal device is in a second area, the second area is the first area or a first registration area RA, and the first RA is an RA set by the first access management network element for the terminal device; and
sending, by the time synchronization function network element, second information to a policy control network element when the first subscription notification message notifies that the location of the terminal device is in the second area, wherein the second information indicates to activate the time synchronization service in a third area, and the third area is a TA in which the first RA overlaps the first area.

4. The method according to claim 2 or 3, wherein after sending, by the time synchronization function network element, the first subscription request message to the first access management network element, the method further comprises:
receiving, by the time synchronization function network element, a second subscription notification message from a second access management network element, wherein the second subscription notification message notifies whether the location of the terminal device is in a second area, the second area is the first area or a first RA, the first RA is an RA set by the first access management network element for the terminal device, and the second access management network element is a serving access management network element of the terminal device; and
determining, by the time synchronization management network element, whether the target access management network element set comprises the second access management network element.

5. The method according to claim 4, wherein the method further comprises:
if the target access management network element set comprises the second access management network element, sending, by the time synchronization function network element, a second subscription request message to the second access management network element, wherein the second subscription request message is used to subscribe to third information, the third information indicates whether the location of the terminal device is in a fourth area, and the fourth area is a TA served by the second access management network element in the coverage area of the time synchronization service; or
if the target access management network element set does not comprise the second access management network element, sending, by the time synchronization function network element, a subscription cancellation request message to the second access management network element, wherein the subscription cancellation request message is used to cancel subscription to the first information.

6. The method according to any one of claims 1 to 5, wherein the method further comprises:
receiving, by the time synchronization function network element, time synchronization subscription data from a data management network element, wherein the time synchronization subscription data comprises information about the coverage area of the time synchronization service and second indication information, and the second indication information indicates to adjust, based on an RA of the terminal device, an area in which the time synchronization service is activated.

7. A communication method, comprising:
obtaining, by a first access management network element, fourth information, wherein the fourth information is used to determine to activate the time synchronization service in a third area, the third area is a TA in which a first registration area RA overlaps a first area, the first RA is an RA set by the first access management network element for the terminal device, and the first area is a TA served by the first access management network element in a coverage area of the time synchronization service;
determining, by the first access management network element, the third area based on the first RA and the first area; and
activating, by the first access management network element, the time synchronization service in the third area.

8. The method according to claim 7, wherein obtaining, by the first access management network element, the fourth information comprises:
receiving, by the first access management network element, the fourth information from a policy control network element.

9. The method according to claim 7, wherein the fourth information is access and mobility subscription data of the terminal device, and obtaining, by the first access management network element, the fourth information comprises:
receiving, by the first access management network element, the access and mobility subscription data from a data management network element, wherein the access and mobility subscription data comprises information about the coverage area of the time synchronization service.

10. The method according to claim 9, wherein the access and mobility subscription data further comprises third indication information, and the third indication information indicates to adjust an area of the time synchronization service based on an RA of the terminal device.

11. A communication system, comprising a time synchronization function network element and a first access management network element, wherein
the time synchronization function network element is configured to perform the method according to any one of claims 1 to 6, and
the first access management network element is configured to perform the method according to any one of claims 7 to 10.

12. A communication apparatus, comprising:
a memory, configured to store computer instructions; and
a processor, configured to execute the computer instructions stored in the memory, to enable the communication apparatus to perform the method according to any one of claims 1 to 6, or
to enable the communication apparatus to perform the method according to any one of claims 7 to 10.

13. A computer-readable storage medium, storing a computer program, wherein when the computer program is executed by a communication apparatus, the method according to any one of claims 1 to 10 is performed.

14. A computer program product comprising instructions, wherein when the computer program product runs on a computer, the method according to any one of claims 1 to 10 is performed.
